# EUROPÄISCHE PATENTSCHRIFT

(11) **EP 3 757 640 B1**
(45) Veröffentlichungstag und Bekanntmachung des Hinweises auf die Patenterteilung: **23.10.2024**
(21) Anmeldenummer: 19182970.4
(22) Anmeldetag: 27.06.2019
(51) Int. Cl.: G02B 6/44

(54) **OPTISCHES MODUL MIT SPLITTER**
OPTICAL MODULE WITH SPLITTER
MODULE OPTIQUE POURVU DE RÉPARTITEUR

(43) Veröffentlichungstag der Anmeldung: 30.12.2020
(73) Patentinhaber: Optonet AG, 6318 Walchwil (CH)
(72) Erfinder: STUDER, Kurt, 6318 Walchwil (CH)
(74) Vertreter: Keller Schneider Patent- und Markenanwälte AG

(56) Entgegenhaltungen:
- EP-A1- 3 273 280
- DE-A1- 19 827 634
- KR-B1- 100 829 713
- US-A- 5 420 957
- US-A1- 2008 112 675
- US-A1- 2010 027 955
- US-A1- 2015 117 829

## Beschreibung

### Technisches Gebiet

Die Erfindung betrifft ein optisches Modul, insbesondere in Form einer passiven optischen Netzwerkkomponente, umfassend ein Gehäuse wobei im Gehäuse mindestens ein optischer Splitter, mindestens eine Spleisshalterung sowie mindestens ein Faserreservoir zur Aufnahme von optischen Fasern vorliegen, wobei das Gehäuse auf einer ersten Seite wenigstens einen ersten Kabeldurchlass aufweist über welchen wenigstens ein erstes optisches Faserkabel in das Gehäuse eingeführt werden kann und auf einer gegenüberliegenden Gehäuseseite wenigstens ein zweiter Kabeldurchlass vorliegt, über welchen wenigstens ein zweites optisches Kabel in das Gehäuse eingeführt werden kann. Des Weiteren bezieht sich die Erfindung auf ein Verfahren zur Herstellung eines optischen Moduls sowie die Verwendung eines optischen Moduls zum Übertragen von optischen Signalen.

### Stand der Technik

Glasfaserkabel werden in der Nachrichtentechnik als Übertragungsmedien in Bereichen eingesetzt, bei denen hohe Reichweiten und Übertragungsraten erforderlich sind. Insbesondere wenn Glasfasernetze bis zu Endkunden verlegt werden sollen ("Fibre To The Home"/FTTH bei Privathaushalten; "Fiber to the Building"/FTTB bei Unternehmen), werden im Bereich zwischen Vermittlungsstellen ("Optical Line Terminal"/OLT) und dem Kundenstandort bzw. dem dortigen optischen Netzwerl<abschluss ("Optical Network Termination"/ONT oder "Optical Network Unit"/ONU) typischerweise passive optische Netzwerke ("Passive Optical Networks"/PON) vorgesehen.

Passive optische Netzwerke bestehen im Gegensatz zu aktiven optischen Netzwerken rein aus passiven Bauelementen und Netzwerkkomponenten und kommen somit ohne eigene Stromversorgung und ohne Switching-Funktionalität aus.

Ein passives optisches Netzwerk besteht beispielsweise im Wesentlichen aus passiven optischen Splittern, welche über optische Fasern mit der Vermittlungsstelle (OLT) und über weitere optische Fasern mit den einzelnen optischen Netzwerl<abschlüssen (ONT/ONU) verbunden sind.

Die Splitter teilen die von der Vermittlungsstelle kommenden optischen Signale physikalisch auf die weiteren optischen Fasern auf, so dass die optischen Signale von der Vermittlungsstelle zu den einzelnen Kundenstandorten bzw. den dort vorliegenden einzelnen optischen Netzwerl<abschlüssen (ONT/ONU) geleitet werden. Optische Signale welche ausgehend von den optischen Netzwerl<abschlüssen am Splitter ankommen, werden kombiniert und an die Vermittlungsstelle weitergeleitet.

Für den Aufbau eines passiven optischen Netzwerks ist es daher erforderlich, entsprechende Splittermodule zur Verfügung zu haben.

Die WO 2017/124018 A1 (Communications Systems Inc.) beschreibt in diesem Zusammenhang beispielsweise optische Splittermodule, welche einen in einem Gehäuse angeordneten Splitter beinhalten sowie eine Mehrzahl von Kabelports über welche optische Faserkabel in den Bereich des Splitters geführt werden können. Zusätzlich kann ein Splittermodul einen Bereich zur Aufnahme von Spleissverbindungen aufweisen. Ebenfalls erwähnt sind Vorrichtungen zum Aufwickeln von optischen Kabeln im Innern des Gehäuses.

Die EP 1 939 658 A2 (Furukawa Electric North America Inc) bezieht sich auch optische Splittermodule, welche für FTTx-Anwendungen in PON-Netzwerl<en vorgesehen sind. Die Splittermodule beinhalten PLC-Splitter, welche in einem Gehäuse untergebracht sind. Das eingangsseitige optische Kabel wird an der einen Stirnseite eines länglichen Gehäuses in dieses eingeführt, während ein Bündel von ausgangsseitigen optischen Kabeln an der gegenüberliegenden Stirnseite austritt.

Die US 2015/0117829 A1 (Tyco Electronics Corp.) beschreibt eine passive optische Netzwerkkomponente mit einem Gehäuse, in welchem auf einem Träger ein passiver optischer Splitter angeordnet ist.

Heutige Splittermodule sind zwar durchaus brauchbar, vermögen aber nicht vollständig zu überzeugen. Insbesondere haben bekannte Splittermodule teilweise einen relativ hohen Platzbedarf, der Anschluss der optischen Fasern an die Splittermodule gestaltet sich schwierig und/oder es mangelt den Modulen an Robustheit.

Es besteht daher nach wie vor Bedarf nach verbesserten Lösungen, welche die vorgenannten Nachteile nicht oder in geringerem Ausmass aufweisen.

### Darstellung der Erfindung

Aufgabe der Erfindung ist es, verbesserte Splittermodule bereitzustellen, welche insbesondere in passiven optischen Netzwerken eingesetzt werden können. Die Splittermodule sollen einen möglichst einfachen, zuverlässigen und sicheren Anschluss von optischen Fasern ermöglichen und die heiklen optischen Elemente möglichst gut schützen. Zudem sollen die Splittermodule einen möglichst geringen Platzbedarf aufweisen und möglichst kompakt stapelbar sein. Weitere Aufgaben der Erfindung liegen in der Bereitstellung von Verfahren zur Herstellung von optischen Splittermodulen und Verwendungen bei der Übertragung von optischen Signalen.

Die Lösungen der Aufgaben sind durch die Merkmale der unabhängigen Ansprüche 1, 14 und 15 definiert.

Ein erster Aspekt der vorliegenden Erfindung betrifft daher ein optisches Modul, insbesondere in Form einer passiven optischen Netzwerkkomponente, umfassend ein Gehäuse, bestehend aus wenigstens zwei Gehäuseteilen, wobei im Gehäuse mindestens ein passiver optischer Splitter, mindestens eine Spleisshalterung sowie mindestens ein Faserreservoir zur Aufnahme von optischen Fasern vorliegen, wobei das Gehäuse auf einer ersten Seite wenigstens einen ersten I<abeldurchlass aufweist über welchen wenigstens ein erstes optisches Faserkabel in das Gehäuse eingeführt werden kann und auf einer gegenüberliegenden Gehäuseseite wenigstens ein zweiter I<abeldurchlass vorliegt, über welchen wenigstens ein zweites optisches I<abel in das Gehäuse eingeführt werden kann. Dabei sind das Faserreservoir und der mindestens eine Splitter in einer Richtung vom ersten I<abeldurchlass zum zweiten I<abeldurchlass hintereinander im Gehäuse angeordnet. Auch sind das Faserreservoir, die wenigstens eine Spleisshalterung und wenigstens eine erste Aufnahme für den wenigstens einen Splitter in einem ersten Gehäuseteil auf der grössten Innenfläche des ersten Gehäuseteils in einer gemeinsamen Ebene des Gehäuseteils angeordnet.

Wie es sich gezeigt hat, lassen sich mit der erfindungsgemässen Anordnung der einzelnen Elemente des Moduls besonders kompakte und gut stapelbare Bauformen realisieren, welche dennoch einfach, zuverlässige und flexible Anschlussmöglichkeiten für optische Faserkabel bieten und relativ einfach herstellbar sind. Dies ist insbesondere darauf zurückzuführen, dass das Faserreservoir und der mindestens eine Splitter in einer Richtung vom ersten Kabeldurchlass zum zweiten Kabeldurchlass hintereinander im Gehäuse angeordnet sind. Damit können die durch den ersten Kabeldurchlass in das Gehäuse eingeführten optischen Fasern insbesondere in direkter Linie in das Faserreservoir geführt und dort aufgenommen werden. Dies reduziert die Biegebelastungen auf die optischen Fasern bei Eintritt in das Gehäuse und allfällige Überlängen der optischen Fasern können im Faserreservoir in einfacher Weise aufgenommen und im Bereich des Faserreservoirs gespleisst werden. Weiter können optische Fasern vom Faserreservoir wiederum in direkter Linie bei minimaler Biegebelastung zum mindestens einen optischen Splitter geführt werden.

Des Weiteren bieten die erfindungsgemässen Module den Vorteil, dass sowohl Faserreservoir als auch Splitter bei geöffnetem Gehäuse gut zugänglich sind, was den Anschluss der optischen Fasern und deren Aufnahme im Kabelreservoir wie auch das Einsetzen des mindestens einen Splitters im Gehäuse vereinfacht. Insbesondere sind damit auch bei eingelegten und angeschlossenen optischen Kabeln sowohl das Kabelreservoir als auch der Splitter frei zugänglich. Die vereinfacht die Herstellung erheblich.

Zudem ermöglicht die erfindungsgemässe Anordnung der einzelnen Elemente im optischen Modul besonders dünne Bauformen. Damit können eine Vielzahl von erfindungsgemässen optischen Modulen bei relativ geringer Gesamtdicke aufeinanderliegend angeordnet werden. Dies ist besonders vorteilhaft, wenn beispielsweise mehrere optische Module gemeinsam in einem Verteilerkasten vorliegen. Aufgrund der an gegenüberliegenden Seiten des Gehäuses angeordneten Kabeldurchlässen kann zudem eine klare räumliche Trennung zwischen den mit der Vermittlungsstelle zu verbindenden und den mit den optischen Netzwerl<abschlüssen zu verbindenden optischen Kabeln geschaffen.

Der Begriff "optische Faser" steht vorliegend für einen einzelnen Lichtwellenleiter. Dieser verfügt typischerweise über einen lichtführenden Kern und einen umgebenden Mantel mit einem niedrigeren Bergungsindex sowie optional eine den Mantel umgebende Schutzschicht, welche beispielsweise aus Kunststoff besteht. Der Kern und der Mantel der optischen Faser können beispielsweise aus Glas und/oder Kunststoff bestehen.

Unter einem "optischen Faserkabel" wird vorliegend eine Anordnung verstanden, bei welcher eine optische Faser, insbesondere wie sie vorstehend beschrieben ist, von einer Schutzhülle umgeben ist. Die Schutzhülle dient insbesondere dazu, die optische Faser vor mechanischen Einflüssen zu schützen und/oder diese zu stabilisieren. Bevorzugt besteht die Schutzhülle aus einem Kunststoffmaterial, insbesondere so dass das optische Faserkabel biegbar ist.

In einem optischen Faserkabel können auch mehrere optische Fasern in einer gemeinsamen Schutzhülle vorliegen.

Ein "I<abeldurchlass" ist insbesondere derart ausgebildet, dass ein optisches Faserkabel in das Gehäuse ein- und/oder ausgeführt werden kann. Beim Kabeldurchlass handelt es sich insbesondere nicht um einen Stecker und/oder eine Steckerbuchse. Bevorzugt ist der Kabeldurchlass so ausgestaltet, dass ein optisches Faserkabel im Bereich des Kabeldurchlasses vollständig umgeben ist und bevorzugt, dass das optische Faserkabel im Kabeldurchlass kraftschlüssig gehalten und/oder festgeklemmt wird.

Die erste Seite des Gehäuses ist insbesondere diejenige Seite, auf welcher ein optisches Faserkabel in das Gehäuse eingeführt wird, welches die im Splitter aufzuteilenden optischen Signale oder die durch den Splitter kombinierten optischen Signale übermittelt. Die erste Seite wird vorliegend auch als Eingangsseite bezeichnet. Die gegenüberliegende Seite ist entsprechend insbesondere diejenige Seite, auf welcher ein optisches Faserkabel in das Gehäuse eingeführt wird, welches die im Splitter zu aufgeteilten optischen Signale oder die im Splitter kombinierten optischen Signale übermittelt. Die zweite Seite oder die gegenüberliegende Seite wird vorliegend auch als Ausgangsseite bezeichnet.

Im Besonderen handelt es sich bei der ersten Seite und/oder der zweiten Seite um eine Stirnseite des Gehäuses. Besonders bevorzugt sind sowohl die erste Seite als auch die zweite Seite Stirnseiten des Gehäuses. Die Richtung vom ersten Kabeldurchlass zum zweiten Kabeldurchlass verläuft in diesem Fall bevorzugt parallel zur Längsachse des Gehäuses.

Das Faserreservoir ist bevorzugt derart ausgestaltet, dass die optischen Fasern kreis- und/oder ellipsenförmig aufgenommen werden können. Damit kann sichergestellt werden, dass die minimalen Biegeradien der optischen Fasern eingehalten und die optischen Fasern in einfacher Art und Weise im Faserreservoir aufgenommen werden können. Zudem bietet eine solche Ausgestaltung den Vorteil, dass in einem zentralen Bereich des Faserreservoirs, in welchem keine optischen Fasern verlaufen, Platz für weitere Elemente des optischen Moduls, beispielsweise die mindestens eine Spleisshalterung, geschaffen wird.

Prinzipiell ist es aber auch denkbar, ein Faserreservoir mit einer anderen Struktur vorzusehen, welche z.B. die Aufnahme der optischen Fasern in Form einer "8" oder in einer unregelmässigen Form ermöglicht.

Die Spleisshalterung umfasst bevorzugt Klemmelemente, mit welchen ein oder mehrere Spleisse im Gehäuse kraftschlüssig festgeklemmt werden können. Die Spleisshalterung ist dabei bevorzugt derart ausgebildet, dass die in der Spleisshalterung eingelegte Spleisse mit Ihren Längsachsen in einer Richtung vom ersten Kabeldurchlass zum zweiten Kabeldurchlass oder entlang der Längsachse des Gehäuses vorliegen.

Gemäss einer bevorzugten Ausführungsform ist die mindestens eine Spleisshalterung in einem zentralen Bereich des Faserreservoirs angeordnet, insbesondere in einem Bereich in welchem keine optischen Fasern verlaufen. Die mindestens eine Spleisshalterung ist bevorzugt derart in einem zentralen Bereich des Faserreservoirs angeordnet, dass im Faserreservoir aufgenommene optische Fasern die mindestens eine Spleisshalterung in einer Ebene umgeben. Damit kann der zur Verfügung stehende Platz bestmöglich genutzt werden. Als Spleisshalterung werden bevorzugt parallel zueinander von einer inneren Gehäusefläche abstehende Stege vorgesehen. Diese sind insbesondere so ausgelegt, dass einer oder mehrere Spleisse zwischen den Stegen aufgenommen und kraftschlüssig, insbesondere durch verklemmen, festgehalten werden können.

Grundsätzlich ist es aber auch denkbar, die mindestens eine Spleisshalterung in einem Bereich nebendem Faserreservoir anzuordnen. Dies kann bei speziellen Anwendungen unter Umständen Sinn machen.

Bevorzugt sind die Spleisshalterung und der Splitter entlang der Richtung vom ersten I<abeldurchlass zum zweiten I<abeldurchlass oder entlang einer Längsachse des Gehäuses hintereinander im Gehäuse angeordnet.

Bevorzugt verfügt das Gehäuse im Innern über einen oder mehrere Aufnahmebereiche und/oder Haltelemente mit welchen der wenigstens eine Splitter im Gehäuse in einer definierten Position positioniert und/oder gehalten werden kann.Die Haltelemente sind beispielsweise so ausgebildet, dass der Splitter form- und/oder kraftschlüssig gehalten werden kann.

Der wenigstens eine Splitter liegt in einer im Gehäuse angeordneten Aufnahme vor. Bei Ausführungen mit mehreren separaten Splittern liegt bevorzugt für jeden der Splitter eine entsprechende Aufnahme vor. Die Aufnahme(n) für den Splitter können auch durch mehrere separate und zusammenwirkende Teile gebildet werden.

Der optische Splitter, die mindestens eine Spleisshalterung und das Faserreservoir sind in einer gemeinsamen Ebene im Gehäuse angeordnet. Dies insbesondere so, dass sämtliche optischen Fasern im Gehäuse in einer gemeinsamen Ebene verlaufen. Bei einer derartigen Anordnung bewegen sich die optischen Signale im Betrieb entsprechend in einer gemeinsamen Ebene. Dadurch wird erreicht, dass die optischen Fasern im Gehäuse lediglich in einer definierten Ebene gekrümmt werden müssen, was im Besonderen bei der Montage vorteilhaft ist und die Einhaltung der minimalen Biegeradien vereinfacht.

Das Gehäuse umgibt das Kabelreservoir, die mindestens eine Spleisshalterung und den mindestens einen Splitter vollständig. Damit ist insbesondere gemeint, dass das Kabelreservoir, die mindestens eine Spleisshalterung und der mindestens eine Splitter vollständig in einem inneren Volumen des Gehäuses aufgenommen sind. Das Gehäuse ist dabei im Besonderen derart ausgestaltet, dass wenn optische I<abel in den I<abeldurchlässen vorliegen, das Gehäuse vollständig abgeschlossen ist. Dies insbesondere so, dass das Gehäuse flüssigkeitsdicht, bevorzugt wasserdicht, verschlossen werden kann oder ist.

Bevorzugt hat das Gehäuse eine quaderförmige äussere Form. Es sind aber grundsätzlich auch andere Formen möglich, z.B. kreis-, elliptisch-, und/oder vieleck-zylindrische äussere Formen.

Das Gehäuse besteht aus wenigstens zwei, insbesondere genau zwei, Gehäuseteilen. Bei den wenigstens zwei Gehäuseteilen handelt es sich bevorzugt um verbindbare oder verbundene Gehäuseteile. Besonders bevorzugt handelt es sich bei den wenigstens zwei Gehäuseteilen um getrennt gefertigte Gehäuseteile, welche verbindbar sind oder verbunden sind, oder es handelt sich um Gehäuseteile, welche über eine gelenkige Verbindung verbunden und verschliessbar sind. Die gelenkige Verbindung kann beispielsweise ein Scharnier und/oder ein flexibler Steg zwischen den beiden Gehäuseteilen sein.

Bevorzugt verfügen die wenigstens zwei Gehäuseteile je über eine quaderförmige äussere Form mit einer oder mehreren Ausnehmungen auf einer Seite, wobei die Ausnehmung(en) den inneren Bereich des Gehäuses bilden. Es sind aber grundsätzlich auch andere Formen für die Gehäuseteile möglich, z.B. halbkreis-, halbelliptisch-, und/oder vieleck-zylindrische äussere Formen.

Im Besonderen handelt es sich bei den wenigstens zwei Gehäuseteilen um zwei Gehäusehälften, welche insbesondere hinsichtlich des äusseren Gehäusevolumens je zwischen 40 - 60 Volumen-%, im Speziellen 45 - 55 Volumen-%, des Gehäuses ausmachen. Dies vereinfacht das Einlegen der optischen Elemente und ermöglicht eine robuste Konstruktion.

Besonders bevorzugt sind die wenigstens zwei Gehäuseteile je einstückig ausgebildet, bevorzugt aus einem Kunststoff. Im Speziellen handelt es sich um Spritzgussteile.

Die Gehäuseteile sind bevorzugt derart ausgestaltet, dass diese nur verbunden und/oder geschlossen werden können, wenn der wenigstens eine Splitter, die optischen Faserkabel und/oder der wenigstens eine Spleiss an den vorgesehenen Stellen korrekt im Gehäuse positioniert sind.

Das Faserreservoir, die wenigstens eine Spleisshalterung und wenigstens eine erste Aufnahme für den wenigstens einen Splitter sind in einem ersten Gehäuseteil angeordnet, in einer gemeinsamen Ebene des Gehäuseteils, auf der grössten Innenfläche des ersten Gehäuseteils. Bei Ausführungen mit mehreren separaten Splittern liegt bevorzugt für jeden der Splitter eine entsprechende Aufnahme vor.

Die wenigstens eine erste Aufnahme kann z.B. Vertiefung und/oder ein durch hervorstehende Stege mindestens teilweise, bevorzugt vollständig, umgebener Bereich sein.

Die wenigstens eine erste Aufnahme für den wenigstens einen Splitter ist dabei mit Vorteil so ausgebildet, dass ein Splitter aus einer Richtung, aus welcher das zweite Gehäuseteil auf das erste Gehäuseteil aufzusetzen ist, eingelegt werden kann und insbesondere gegenüber Bewegungen in der gemeinsamen Ebene formschlüssig gehalten wird. Bei Ausführungen mit mehreren separaten Splittern gilt dies insbesondere für alle Aufnahmen. Damit können die optischen Elemente in einfacher Art und Weise in das erste Gehäuseteil eingelegt werden und zugleich ist eine definierte Positionierung im ersten Gehäuseteil gewährleistet.

Ein zweites Gehäuseteil verfügt bevorzugt über wenigstens eine zweite Aufnahme, in welche ein im ersten Gehäuseteil vorliegender und teilweise aus dessen wenigstens einer ersten Aufnahme herausragender Splitter teilweise aufgenommen werden kann.Bei Ausführungen mit mehreren separaten Splittern liegt bevorzugt für jeden der Splitter eine entsprechende Aufnahme vor. Dadurch wird der Splitter beim Verbinden der beiden Gehäuseteile gegenüber allen Raumrichtungen formschlüssig im Gehäuse fixiert.

Die wenigstens eine zweite Aufnahme kann ebenfalls z.B. eine Vertiefung und/oder ein durch hervorstehende Stege mindestens teilweise, bevorzugt vollständig, umgebener Bereich sein.

Der wenigstens eine Splitter und die Aufnahmen in den beiden Gehäuseteilen sind bevorzugt so gewählt, dass wenn das Gehäuse geschlossen ist, der wenigstens eine Splitter hinsichtlich seines äusseren Volumens zu 30 - 70 Volumen-%, insbesondere zu 40 -60 Volumen-%, im Speziellen zu 45 - 55 Volumen-%, in der wenigstens einen ersten Aufnahme des ersten Gehäuseteils und zu 70 - 30 Volumen-%, insbesondere zu 60 - 40 Volumen-%, im Speziellen zu 55 - 45 Volumen-% in der wenigstens eine zweite Aufnahme im zweiten Gehäuseteil vorliegt. Bei Ausführungen mit mehreren separaten Splittern gilt dies bevorzugt für jeden der Splitter und für alle Aufnahmen.

Damit ist gewährleistet, dass der wenigstens eine Splitter bei geschlossenem Gehäuse korrekt im Gehäuse positioniert ist. Falls nicht, kann das Gehäuse gar nicht geschlossen werden. Zudem kann der wenigstens eine Splitter so in einem zentralen Bereich des Gehäuses gehalten werden, was einen optimalen Schutz bietet.

Besonders verfügt das Gehäuse über eine oder mehrere mechanische Verbindungen, über welche die wenigstens zwei Gehäuseteile kraft- und/oder formschlüssig verbindbar sind oder verbunden sind. Dadurch können die beiden Gehäuseteile in definierter Ausrichtung zueinander verbunden werden. Bevorzugt handelt es sich bei der Verbindung um eine Schnappverbindung und/oder eine Rastverbindung.

Bevorzugt weist wenigstens eines der beiden Gehäuseteile ein erstes Verbindungselement auf, welches bei geschlossenem Gehäuse mit einem zweiten Verbindungselement am zweiten Gehäuseteil form- und/oder kraftschlüssig zusammenwirkt. Bevorzugt handelt es sich beim ersten Verbindungselement um einen Vorsprung, einen Stift, eine Wulst, ein verrastbares Element, eine Rastnase, einen Rasthaken, einen Schnapphaken und/oder eine Feder, während das zweite Verbindungselement eine Vertiefung, eine Öffnung, einen Hinterschnitt und/oder ein Nut beinhaltet. Das erste und das zweite Verbindungselement sind dabei bevorzugt so ausgelegt, dass eine kraft- und/oder formschlüssige Verbindung zwischen den wenigstens zwei Gehäuseteilen herstellbar ist.

Besonders bevorzugt ist das erste Verbindungselement ein verrastbares Element und das zweite Verbindungselement ist ein komplementäres Element mit welchem das verrastbare Element form- und/oder kraftschlüssig zusammenwirken kann.

Gemäss einer weiteren bevorzugten Ausführungsform ist die mechanische Verbindung im Bereich eines Kabeldurchlasses angeordnet. Im Speziellen ist sowohl im Bereich des ersten Kabeldurchlasses, als auch im Bereich des zweiten Kabeldurchlasses je mindestens eine mechanische Verbindung vorgesehen. Besonders bevorzugt liegt die wenigstens eine mechanische Verbindung an einer Längsseite des Gehäuses vor, insbesondere so, dass im Bereich eines Kabeldurchlasses, insbesondere in den Bereichen aller Kabeldurchlässe, an gegenüberliegenden Längsseiten des Gehäuses je mindestens eine mechanische Verbindung angeordnet ist.

Damit kann beim Zusammensetzen der mindestens zwei Gehäuseteile im Bereich der I<abeldurchlässe eine definierte mechanische Verbindung erzeugt werden. Werden die I<abeldurchlässe durch gegenüberliegende Ausnehmungen in den mindestens zwei Gehäuseteilen gebildet, können die durch die I<abeldurchlässe geführten optischen Kabel z.B. mit einer definierten Kraft zwischen den beiden Gehäuseteilen verklemmt werden. Dadurch können definierte minimale Auszugskräfte für die optischen Kabel gewährleistet werden.

Grundsätzlich ist es aber auch möglich, mechanische Verbindungen zusätzlich oder alternativ in anderen Bereichen der Gehäuseteile vorzusehen.

Insbesondere hat es sich als vorteilhaft herausgestellt, zusätzlich mindestens eine weitere mechanische Verbindung vorzusehen, welche in einer Richtung vom ersten Kabeldurchlass zum zweiten Kabeldurchlass oder in einer Längsrichtung des Gehäuses zwischen den zwei vorgenannten und in den Bereichen der Kabeldurchlässe liegenden mechanischen Verbindungen vorzusehen. Bevorzugt wird dabei auf gegenüberliegenden Längsseiten des Gehäuses je mindestens eine weitere mechanische Verbindung angeordnet.

Ganz besonders bevorzugt liegen beidseits des wenigstens einen ersten Kabeldurchlasses und/oder beidseits des wenigstens einen zweiten Kabeldurchlasses, insbesondere auf gegenüberliegenden Längsseiten des Gehäuses, je eine mechanische Verbindung vor. Mit anderen Worten liegen der wenigstens eine erste Kabeldurchlass und/oder der wenigstens eine zweite Kabeldurchlass, bevorzugt beide Kabeldurchlässe, je zwischen zwei mechanischen Verbindungen.

Die mechanischen Verbindungen sind dabei mit Vorteil Rastverbindungen, umfassend ein erstes Verbindungselement in Form eines verrastbaren Elements, insbesondere in Form eines Rasthakens, welches am ersten Gehäuseteil angeordnet ist, und ein zweites Verbindungselement in Form eines komplementären Elements, insbesondere in Form eines Vorsprungs und/oder einer Vertiefung, welches am zweiten Gehäuseteil angeordnet ist, mit welchem das verrastbare Element form- und/oder kraftschlüssig zusammenwirken kann. Das erste Verbindungselement ist dabei an einem ersten Gehäuseteil angeordnet, während das zweite Verbindungselement an einem zweiten Gehäuseteil vorliegt.

Dadurch kann eine besonders gleichmässige und definierte Verklemmung von optischen Kabeln in den Kabeldurchlässen erreicht werden.

Gemäss einer weiteren vorteilhaften Ausführungsform sind die wenigstens zwei Gehäuseteile stoffschlüssig verbindbar oder verbunden. Besonders bevorzugt sind die wenigstens zwei Gehäuseteile dabei mit einem Klebstoff verklebt und/oder miteinander verschweisst.

Besonders bevorzugt ist es, wenn die wenigstens zwei Gehäuseteile sowohl stoffschlüssig als auch kraft- und/oder formschlüssig verbindbar sind oder verbunden sind.

Dadurch lässt sich eine mechanisch besonders stabile und präzise Verbindung erzielen und zugleich können die mindestens zwei Gehäuseteile durch die stoffschlüssige Verbindung abschnittsweise oder vollständig abgedichtet werden.

Besonders vorteilhaft ist es, wenn wenigstens einer der Kabeldurchlässe, insbesondere beide oder alle Kabeldurchlässe, durch gegenüberliegende Ausnehmungen in den mindestens zwei Gehäuseteilen gebildet werden. Dies insbesondere so, dass wenn wenigstens die zwei Gehäuseteile verbunden sind, die Ausnehmungen derart gegenüberliegen, dass ein allseitig von den Gehäuseteilen umgebener Durchbruch ins Innere des Gehäuses gebildet wird. Eine Ebene, welche durch eine Kontaktfläche der beiden Gehäuseteile im Bereich neben den Ausnehmungen gebildet wird, verläuft bei zusammengesetztem Gehäuse insbesondere durch den durch die beiden Ausnehmungen gebildeten Durchbruch.

Bei den Ausnehmungen handelt es sich im Besonderen um rinnenförmige Ausnehmungen. Rinnenförmige Ausnehmungen sind dabei insbesondere als durchgehende Nuten, welche in einer Richtung parallel zur Richtung vom ersten Kabeldurchlass zum zweiten Kabeldurchlass oder parallel zur Längsachse des Gehäuses verlaufen, ausgebildet.

Die Ausnehmungen sind mit Vorteil rinnenförmige Ausnehmungen mit einer konkaven Wölbung und optional einer wellenförmigen Oberfläche.

Die wellenförmige Oberfläche, falls vorhanden, ist insbesondere derart ausgebildet, dass die Wellenkämme in einer Richtung parallel zur Richtung vom ersten Kabeldurchlass zum zweiten Kabeldurchlass oder parallel zur Längsachse des Gehäuses verlaufen.

Die Form der Ausnehmungen ist insbesondere wenigstens teilweise, im Besonderen nur teilweise, komplementär zu einer äusseren Form von einem oder mehreren darin aufzunehmenden optischen Faserkabeln. Eine wellenförmige Oberfläche kommt mit Vorteil dann zur Anwendung, wenn in einem einzelnen Kabeldurchlass mehrere optische Faserkabel aufgenommen werden sollen.

Durch die teilweise komplementäre Form kann die Kontaktfläche zu den optischen Kabeln vergrössert werden, womit die Auszugskräfte vergrössert werden können und eine definiertere Anordnung der optischen Faserkabel in den Kabeldurchlässen resultiert.

Die gegenüberliegenden Ausnehmungen in den beiden Gehäuseteilen verfügen bevorzugt über die gleiche geometrische Form und/oder Grösse. Dies ist aber nicht zwingend.

Im Speziellen verfügt ein erstes Gehäuseteil auf einer ersten Seite über wenigstens eine Ausnehmung und ein zweites Gehäuseteil verfügt auf einer ersten Seite ebenfalls über eine Ausnehmung, wobei die beiden Ausnehmungen im zusammengesetzten Gehäuse einander gegenüberliegen. Weiter bevorzugt verfügt das erste Gehäuseteil auf einer zur ersten Seite gegenüberliegenden Seite über wenigstens eine weitere Ausnehmung und das zweite Gehäuseteil verfügt auf einer zur ersten Seite gegenüberliegenden Seite ebenfalls über eine weitere Ausnehmung, wobei die beiden weiteren Ausnehmungen im zusammengesetzten Gehäuse einander gegenüberliegen.

Werden eine oder mehrere Kabeldurchlässe durch gegenüberliegende Ausnehmungen in den mindestens zwei Gehäuseteilen gebildet, kann ein optisches Faserkabel in einen Kabeldurchlass eingelegt werden, ohne dass es wie bei einer Bohrung durch eine Öffnung hindurch geschoben werden muss. Insgesamt vereinfacht dies den Arbeitsaufwand beider Herstellungen signifikant. Zudem besteht weniger die Gefahr, dass beim Einlegen des optischen Faserkabels die empfindlichen optischen Fasern beschädigt werden.

Die optischen Faserkabel und die Ausnehmungen in den beiden Gehäuseteilen sind bevorzugt so aufeinander abgestimmt, dass wenn das Gehäuse geschlossen ist, im Bereich des I<abeldurchlasses die gesamte Querschnittsfläche aller in einem Kabeldurchlass vorliegenden optischen Faserkabel zu 30 - 70 %, insbesondere zu 40 -60 %, im Speziellen zu 45 - 55 %, in einer Ausnehmung des ersten Gehäuseteils vorliegt und zu 70 - 30 %, insbesondere zu 60 - 40 %, im Speziellen zu 55 - 45 %, in einer gegenüberliegenden Ausnehmung im zweiten Gehäuseteil vorliegt. Dies gilt bevorzugt für alle optischen Faserkabel und Ausnehmungen

Damit ist gewährleistet, dass die optischen Faserkabel bei geschlossenem Gehäuse korrekt im Gehäuse positioniert sind. Falls nicht, kann das Gehäuse gar nicht geschlossen werden.

Weiter ist es bevorzugt, wenn das Gehäuse an der Aussenseite Mittel zum form- und/oder kraftschlüssigen Verbinden von zwei, drei oder mehreren der optischen Module untereinander verfügen. Die Mittel zum form- und/oder kraftschlüssigen Verbinden könne beispielsweise Vorsprünge, Einkerbungen, Nuten und/oder Vertiefungen umfassen. Die Verbindung der optischen Module kann durch form- und/oder kraftschlüssig zusammenwirkende Mittel und/oder über Drittelemente erzielt werden oder vorliegen. Als Drittelemente sind z.B. Führungsschienen, Klammern und/oder Kabelbinder geeignet.

Solche Mittel zum form- und/oder kraftschlüssigen Verbinden sind aber nicht zwingend. Beispielsweise können mehrere der optischen Module an der Aussenseite der Gehäuse auch miteinander verklebt oder anderweitig verbunden werden.

Beim Splitter handelt es sich bevorzugt um einen passiven optischen Splitter, insbesondere basierend auf einer planaren Lichtwellenleiterstruktur. Solche Splitter werden auch als PLC-Splitter bezeichnet (Planar Light Circuit-Splitter). Dabei sind die passiven Wellenleiterfunl<tionen auf einem Chip, insbesondere einem Glaschip, integriert. Mit solchen Splittern kann bei geringem Bauvolumen und bei geringen Einfügeverlusten eine definierte Verteilung der Lichtsignale von einer optischen Faser auf eine Vielzahl von weiteren optischen Fasern oder eine definierte Kombination der Lichtsignale aus einer Vielzahl von optischen Fasern in eine einzelne optische Faser erreicht werden.

Die Herstellung solcher Splitter ist dem Fachmann an sich bekannt: Beispielsweise können durch ein lonenaustauschverfahren in Glas durch eine entsprechende photolithographisch erzeugte Metallmaske Natriumionen des Glases lokal begrenzt durch Silberionen ersetzt werden. Die Silberionen bewirken dabei eine Brechzahlerhöhung in den durch die Maske vorgegebenen Bahnen und bilden somit die Wellenleiterstruktur. Diese wird sodann durch einen Diffusionsprozess unter Verwendung von elektrischen Feldern ins Innere des Glases transferiert. Ebenfalls bekannt sind sogenannte "Silica on Silicon"- oder "Silica on Silica"-Abscheideverfahren, bei welchen Quarzglas auf einem Substrat aus Silizium oder Glas abgeschieden, nachfolgend Ätzprozesse durchgeführt und Quarzglasschichten aufgebracht werden.

Grundsätzlich sind aber auch andere Splitter einsetzbar.

Bevorzugt verfügt das optische Modul nicht über einen aktiven optischen Splitter und/oder eine aktive optische Komponente. Unter einem aktiven optischen Splitter oder einer aktiven optischen Komponente ist vorliegend ein Splitter oder eine Komponente zu verstehen, welcher zum Betrieb elektrische Energie benötigt und/oder eine Switching-Funktionalität aufweist.

Bevorzugt verfügt der Splitter über ein Aufteilungsverhältnis im Bereich von 1:n, wobei im Besonderen n = 2 - 64, im Speziellen 8 - 32 oder 16 ist.

Der Splitter ist insbesondere für die Übertragung von optischen Signalen mit einer Wellenlänge von im Bereich von 1'260 - 1'650 nm ausgelegt.

Besonders bevorzugt verfügt das erfindungsgemässe optische Modul über zwei, drei oder mehr Splitter. Damit können optische Signale von mehreren optischen Fasern jeweils auf eine Vielzahl von weiteren optischen Fasern mit einem einzigen optischen Modul verteilt werden. Damit können bei geringem Platzbedarf mehrere unabhängige Splitterfunl<tionalitäten realisiert werden.

Gemäss einer Ausführungsform liegen zwei, drei oder mehr separate Splitter, insbesondere Splitter basierend auf einer planaren Lichtwellenleiterstruktur, vor.

Besonders bevorzugt ist eine Ausführungsform, bei welcher zwei, drei oder mehr Splitter auf einem einzigen Substrat oder Chip integriert sind. Insbesondere verfügt dabei jeder der Splitter auf dem Substrat oder Chip über ein Aufteilungsverhältnis im Bereich von 1:n, wobei n wie vorstehend definiert ist und die Splitter funktionieren unabhängig voneinander.

Besonders bevorzugt ist eine Ausführungsform mit zwei unabhängigen Splittern auf einem gemeinsamen Substrat oder Chip, wobei jeder der Splitter ein Aufteilungsverhältnis von 1:n mit n = 2 - 64, im Besonderen 8 - 32 oder 16 aufweist.

Durch die Verwendung von mehreren Splittern auf einem einzigen Substrat oder Chip kann der Platzbedarf bei mehreren Splittern nochmals deutlich gesenkt werden.

Das Gehäuse, die optischen Kabel, die optischen Fasern und/oder der wenigstens eine Splitter sind insbesondere derart ausgestaltet und aufeinander abgestimmt, dass das Gehäuse nicht geschlossen wird, wenn die optischen Kabel und der wenigstens eine Splitter nicht in den dafür vorgesehenen Positionen im Gehäuse vorliegen.

In montiertem Zustand verläuft wenigstens ein erstes optisches Faserkabel durch den wenigstens einen ersten Kabeldurchlass ins Innere des Gehäuses. Dabei handelt es sich im Besonderen um ein optisches Kabel, welches die im Splitter aufzuteilenden optischen Signale oder die durch den Splitter kombinierten optischen Signale übermittelt. Insbesondere handelt es sich um ein Kabel welches von einer Vermittlungsstelle zum optischen Modul verläuft.

Das wenigstens eine erste optische Faserkabel und/oder die darin enthaltenen optischen Fasern werden dabei im Bereich des wenigstens einen ersten Kabeldurchlasses in einer Richtung vom ersten Kabeldurchlass zum zweiten Kabeldurchlass in das oder aus dem Gehäuse eingeführt.

Am freien Ende des optischen Faserkabels ist insbesondere ein optischer Stecker oder eine optische Steckerbuchse angeschlossen. Damit kann das optische Faserkabel beispielsweise in der Vermittlungsstelle an weitere Netzwerkkomponenten angeschlossen werden. Eine Länge des wenigstens einen ersten optischen Faserkabels ausserhalb des Gehäuses misst beispielsweise mindestens 50 cm, insbesondere mindestens 1 m, bevorzugt mindestens 3 m oder mindestens 5 m.

Das wenigstens eine erste optische Faserkabel ist mit Vorteil im wenigstens einen ersten Kabeldurchlass festgeklemmt und/oder darin stoffschlüssig verbunden, so dass eine definierte Auszugskraft sichergestellt ist.

Im Besonderen ist das wenigstens eine erste optische Faserkabel in gegenüberliegenden Ausnehmungen in den mindestens zwei Gehäuseteilen, welche den wenigstens einen ersten Kabeldurchlass bilden, aufgenommen und befestigt. Das wenigstens eine erste optische Faserkabel ist insbesondere zwischen den beiden Gehäuseteilen in den gegenüberliegenden Ausnehmungen im Kabeldurchlass festgeklemmt und/oder verklebt.

Das wenigstens eine erste optische Faserkabel verfügt dabei insbesondere über eine oder mehrere optische Fasern, welche zur Übertragung von optischen Signalen mit Wellenlängen von 1'260 - 1'650 nm ausgelegt sind. Die optischen Fasern verfügen insbesondere über einen minimalen Biegeradius von ≤ 15 mm, bevorzugt ≤ 10 mm, im Besonderen ≤ 7 mm. Geeignete optische Fasern bzw. die optischen Faserkabel sind beispielsweise vom Typ G657A/B (gemäss Norm ITU-T G.657; Version 11/2016). Es können aber auch andere Fasern eingesetzt werden.

Insbesondere verläuft ein erstes optisches Faserkabel mit zwei oder mehr unabhängigen optischen Fasern in einer gemeinsamen Schutzhülle durch den wenigstens einen ersten Kabeldurchlass ins Innere des Gehäuses. Es ist aber beispielsweise auch möglich, zwei separate erste optische Faserkabel mit je einer einzelnen optischen Faser in einer Schutzhülle durch den wenigstens einen ersten Kabeldurchlass oder durch zwei separate I<abeldurchlässe auf der ersten Seite ins Innere des Gehäuses zu führen.

Im Innern des Gehäuses ragen die im optischen Kabel in das Gehäuse eingeführten optischen Fasern bevorzugt aus der Schutzhülle heraus und verlaufen durch das Faserreservoir bis zu einer Spleissstelle, welche in einem in der Spleisshalterung vorliegenden Spleisschutz angeordnet ist. An der Spleissstelle sind die optischen Fasern mit lichtwellenleitenden Fasern verbunden, welche am Splitter angeschlossen sind.

In montiertem Zustand verläuft insbesondere ein wenigstens zweites optisches Faserkabel durch den wenigstens einen zweiten Kabeldurchlass ins Innere des Gehäuses. Dabei handelt es sich im Besonderen um ein optisches Kabel, welches die im Splitter aufgeteilten optischen Signale oder die im Splitter zu kombinierenden optischen Signale übermittelt.

Das wenigstens eine zweite optische Faserkabel und/oder die darin enthaltenen optischen Fasern werden dabei im Bereich des wenigstens einen zweiten Kabeldurchlasses in einer der Richtung vom ersten Kabeldurchlass zum zweiten Kabeldurchlass in das oder aus dem Gehäuse eingeführt.

Das wenigstens eine zweite optische Faserkabel beinhaltet wenigstens eine optische Faser in einer Schutzhülle. Gemäss einer bevorzugten Ausführungsform verlaufen wenigstens zwei, drei oder mehr optische Kabel durch den wenigstens einen zweiten Kabeldurchlass. Mit Vorteil entspricht die Anzahl an optischen Kabeln, welche durch den zweiten Kabeldurchlass verlaufen, der Zahl n des Aufteilungsverhältnisses 1:n des wenigstens einen Splitters. Bei mehreren Splittern entspricht die Anzahl an optischen Kabeln, welche durch den zweiten Kabeldurchlass verlaufen, im Besonderen der Summe aller Zahlen n der des Aufteilungsverhältnisse der vorhandenen Splitter. Dies unabhängig davon, ob mehrere separate Splitter vorliegen oder ob mehrere Splitter auf einem gemeinsamen Substrat vorliegen.

Insbesondere verfügt das Gehäuse auf der gegenüberliegenden Seite pro vorhandenem Splitter über wenigstens einen, insbesondere genau einen, zweiten Kabeldurchlass. Dadurch können die optischen Kabel direkt den einzelnen Splittern zugeordnet werden. Es ist aber auch möglich, lediglich einen einzigen zweiten Kabeldurchlass vorzusehen, durch welchen sämtliche der zweiten optischen Faserkabel verlaufen. Eine solche Ausführungsform ist aus konstruktiver Sicht einfacher zu realisieren.

Das wenigstens eine zweite optische Faserkabel ist dabei mit Vorteil im wenigstens einen zweiten Kabeldurchlass festgeklemmt und/oder darin stoffschlüssig verbunden, so dass eine definierte Auszugskraft sichergestellt ist.

Am freien Ende des wenigstens einen zweiten optischen Faserkabels ist insbesondere ein optischer Stecker oder eine optische Steckerbuchse angeschlossen. Damit kann das optische Faserkabel beispielsweise an einen optischen Netzwerl<abschluss an weitere Netzwerkkomponenten angeschlossen werden.

Eine Länge des wenigstens einen zweiten optischen Faserkabels ausserhalb des Gehäuses misst beispielsweise mindestens 50 cm, insbesondere mindestens 1 m, bevorzugt mindestens 3 m oder mindestens 5 m.

Im Besonderen ist das wenigstens eine zweite optische Faserkabel im Bereich der stirnseitigen Gehäusebegrenzung eines aus mindestens zwei Gehäuseteile bestehenden Gehäuses in gegenüberliegenden Ausnehmungen, welche den wenigstens einen zweiten Kabeldurchlass bilden, aufgenommen und befestigt. Das wenigstens eine zweite optische Kabel ist dabei insbesondere zwischen den beiden Gehäuseteilen festgeklemmt und/oder verklebt.

Das wenigstens eine zweite optische Faserkabel verfügt insbesondere über eine oder mehrere optische Fasern, welche zur Übertragung von optischen Signalen mit Wellenlängen von 1'260 - 1'650 nm ausgelegt sind. Die optischen Fasern verfügen insbesondere über einen minimalen Biegeradius von ≤ 15 mm, bevorzugt ≤ 10 mm, im Besonderen ≤ 7 mm. Geeignete optische Fasern sind beispielsweise vom Typ G657A/B. Es können aber auch andere Fasern eingesetzt werden.

In montiertem Zustand werden sämtliche optische Fasern jeweils bevorzugt innerhalb einer durch eine Gehäusebegrenzung hindurch ragende Schutzhülle der optischen Faserkabel in das Gehäuse ein- bzw. daraus herausgeführt.

Im Besonderen sind am Gehäuse selbst keine optischen Stecker und/oder optischen Steckerbuchsen angebracht. Im Speziellen verfügt das optische Modul über keinerlei Stecker und/oder Steckerbuchsen.

Das optische Modul verfügt im Besonderen über keine aktive Komponente, insbesondere keine aktive optische Komponente. Damit ist insbesondere gemeint, dass das optische Modul keinerlei Komponenten aufweist, welche durch elektrische Energie betrieben werden.

Ein weiterer Aspekt der vorliegenden Erfindung betrifft ein Verfahren zur Herstellung eines optischen Moduls wie es vorstehend beschrieben ist. Dieses umfasst die folgenden Schritte:
a) Bereitstellen eines Gehäuses für ein optisches Modul, wobei das Gehäuse mindestens eine Spleisshalterung, mindestens ein Faserreservoir zur Aufnahme von optischen Fasern und mindestens eine Aufnahme für einen optischen Splitter umfasst und wobei das Gehäuse auf einer ersten Seite wenigstens einen ersten Kabeldurchlass aufweist über welchen wenigstens ein erstes optisches Faserkabel in das Gehäuse eingeführt werden kann und auf einer gegenüberliegenden Gehäuseseite wenigstens ein zweiter Kabeldurchlass vorliegt, über welchen wenigstens ein zweites optisches Kabel in das Gehäuse eingeführt werden kann und wobei das Faserreservoir und die mindestens eine Aufnahme für einen optischen Splitter in einer Richtung vom ersten Kabeldurchlass zum zweiten Kabeldurchlass hintereinander im Gehäuse angeordnet sind;
b) Bereitstellen eines optischen Splitters;
c) Einbringen von einem oder mehreren optischen Faserkabeln in die Kabeldurchlässe;
d) Verbinden von freiliegenden optischen Fasern eines optischen Faserkabels durch eine Spleissverbindung mit optischen Anschlussfasern des Splitters;
e) Einlegen des Splitters in die dafür vorgesehene Aufnahme;
f) Aufnehmen von Überlängen der optischen Fasern des optischen Faserkabels und/oder der Anschlussfasern des optischen Splitters;
g) Einlegen der gespleissten Stelle in die Spleissaufnahme;
h) Verschliessen des Gehäuses.

Die genannten Schritte a) - h) müssen nicht in der angegebenen Reihenfolge durchgeführt werden und können auch weiter aufgeteilt und/oder gleichzeitig ausgeführt werden.

In Schritt a) wird ein Gehäuse bereitgestellt, welches erfindungsgemäß aus wenigstens zwei, insbesondere genau zwei, Gehäuseteilen besteht. Bevorzugt sind die wenigstens zwei Gehäuseteile wie vorstehend beschrieben ausgestaltet.

Erfindungsgemäß ist das Faserreservoir, die wenigstens eine Spleisshalterung und wenigstens eine erste Aufnahme für den wenigstens einen Splitter in einem ersten Gehäuseteil angeordnet sind, in einer gemeinsamen Ebene des Gehäuseteils auf der grössten Innenfläche des ersten Gehäuseteils. Bei Ausführungen mit mehreren separaten Splittern liegt bevorzugt für jeden der Splitter eine entsprechende Aufnahme vor.

Besonders bevorzugt ist es auch wenn die wenigstens zwei Gehäuseteile durch eine oder mehrere mechanische Verbindungen kraft- und/oder formschlüssig verbindbar sind. Die vorstehend im Zusammenhang mit den erfindungsgemässen optischen Modulen beschriebenen vorteilhaften Ausgestaltungen der Ausnehmungen und der Verbindungen sind bevorzugt auch für das Verfahren vorgesehen.

Der wenigstens eine Splitter und die Aufnahmen in den beiden Gehäuseteilen sind bevorzugt so aufeinander abgestimmt, dass wenn das Gehäuse geschlossen ist, der wenigstens eine Splitter hinsichtlich seines äusseren Volumens zu 30 - 70 Volumen-%, insbesondere zu 40 -60 Volumen-%, im Speziellen zu 45 - 55 Volumen-%, in der wenigstens einen ersten Aufnahme des ersten Gehäuseteils und zu 70 - 30 Volumen-%, insbesondere zu 60 - 40 Volumen-%, im Speziellen zu 55 - 45 Volumen-% in der wenigstens einen zweiten Aufnahme im zweiten Gehäuseteil vorliegt. Bei Ausführungen mit mehreren separaten Splittern gilt dies bevorzugt für jeden der Splitter und für alle Aufnahmen. Die weiteren vorstehend im Zusammenhang mit den erfindungsgemässen optischen Modulen beschriebenen vorteilhaften Ausgestaltungen der Splitter und der Aufnahmen für die Splitter sind bevorzugt auch für das Verfahren vorgesehen.

Weiter ist es besonders vorteilhaft, wenn wenigstens einer der Kabeldurchlässe, insbesondere beide oder alle Kabeldurchlässe, durch gegenüberliegende Ausnehmungen in den mindestens zwei Gehäuseteilen gebildet werden. Im Speziellen verfügt ein erstes Gehäuseteil auf einer ersten Seite, insbesondere einer ersten Stirnseite, über wenigstens eine Ausnehmung und ein zweites Gehäuseteil verfügt auf einer ersten Seite, insbesondere einer zweiten Stirnseite, ebenfalls über eine Ausnehmung, wobei die beiden Ausnehmungen im zusammengesetzten Gehäuse einander gegenüberliegen. Weiter bevorzugt verfügt das erste Gehäuseteil auf einer zur ersten Seite gegenüberliegenden Seite über wenigstens eine weitere Ausnehmung und das zweite Gehäuseteil verfügt auf einer zur ersten Seite ebenfalls gegenüberliegenden Seite ebenfalls über eine weitere Ausnehmung, wobei die beiden weiteren Ausnehmungen im zusammengesetzten Gehäuse einander gegenüberliegen.

Die weiteren vorstehend im Zusammenhang mit den erfindungsgemässen optischen Modulen beschriebenen vorteilhaften Ausgestaltungen der Ausnehmungen und der I<abeldurchlässe sind bevorzugt auch für das Verfahren vorgesehen.

Die optischen Faserkabel und die Ausnehmungen in den beiden Gehäuseteilen sind bevorzugt so aufeinander abgestimmt, dass wenn das Gehäuse geschlossen ist, im Bereich des I<abeldurchlasses die gesamte Querschnittsfläche aller in einem Kabeldurchlass vorliegenden optischen Faserkabel zu 30 - 70 %, insbesondere zu 40 -60 %, im Speziellen zu 45 - 55 %, in einer Ausnehmung des ersten Gehäuseteils vorliegt und zu 70 - 30 %, insbesondere zu 60 - 40 %, im Speziellen zu 55 - 45 %, in einer gegenüberliegenden Ausnehmung im zweiten Gehäuseteil vorliegt. Dies gilt bevorzugt für alle optischen Faserkabel und Ausnehmungen.

Das Einbringen von einem oder mehreren optischen Faserkabeln in die Kabeldurchlässe gemäss Schritt c) erfolgt insbesondere so, dass die optischen Faserkabel zuerst teilweise in eine Ausnehmung des ersten Gehäuseteil eingelegt und die nicht in der ersten Aufnahme vorliegenden Anschnitte des optischen Faserkabels nachher beim Schliessen des Gehäuses in eine gegenüberliegende Ausnehmung des zweiten Gehäuseteils eingebracht wird.

Das Einlegen des Splitters in Schritt d) erfolgt insbesondere so, dass der Splitter zuerst teilweise in eine Ausnehmung des ersten Gehäuseteils eingelegt und die nicht in der ersten Aufnahme vorliegenden Bereiche des Splitters nachher beim Schliessen des Gehäuses in eine gegenüberliegende Aufnahme im zweiten Gehäuseteil eingebracht wird.

Beim Verschliessen des Gehäuses in Schritt h) werden bevorzugt die wenigstens zwei Gehäuseteile stoffschlüssig als auch kraft- und/oder formschlüssig verbunden.

Die optischen Faserkabel, der Splitter und die Spleisse werden bevorzugt aus einer Richtung, aus welcher das zweite Gehäuseteil auf das erste Gehäuseteil aufzusetzen ist, in das erste Gehäuseteil eingelegt.

Während dem erfindungsgemässen Verfahren werden die optischen Kabel und insbesondere auch die optischen Fasern, bevorzugt nicht durch eine Öffnung hindurchgeschoben.

Ein weiterer Aspekt der vorliegenden Erfindung betrifft die Verwendung eines optischen Moduls wie es vorstehend beschrieben zum Übertragen von optischen Signalen, insbesondere optischen Signalen mit Wellenlängen im Bereich von 1'260 - 1'650 nm.

Das optische Modul wird im Besonderen in einem optischen Netzwerk verwendet, insbesondere als passive Verbindung zwischen einer Vermittlungsstelle (OLT) und einem Kundenstandort oder einem dortigen optischen Netzwerl<abschluss (ONT/ONU).

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine Aufsicht auf den Innenbereich einer unteren Gehäusehälfte eines ersten optischen Moduls;
- Fig. 2: Eine Seitenansicht des unteren Gehäuseteils aus Fig. 1;
- Fig. 3: Eine Aufsicht auf den Innenbereich der oberen Gehäusehälfte des ersten optischen Moduls;
- Fig. 4: Das erste optische Modul mit geschlossenem Gehäuse von der linken Stirnseite her betrachtet;
- Fig. 5: Das erste optische Modul mit geschlossenem Gehäuse von der rechten Stirnseite her betrachtet;
- Fig. 6: Eine perspektivische Darstellung des geschlossenen ersten optischen Moduls aus den Fig. 4 und 5;
- Fig. 7: Eine perspektivische Darstellung eines zweiten optischen Moduls mit zwei separaten Kabeldurchlässen auf einer Stirnseite;
- Fig. 8: Eine Detailansicht des zweiten optischen Moduls aus Fig. 7, wobei die Querschnittsfläche entlang der Linie A - A in Fig. 7 sichtbar ist. Dabei ist zu erkennen, dass die I<abeldurchlässe eine wellenförmige Oberfläche aufweisen;
- Fig. 9: Eine schematische Darstellung des Innenlebens des zweiten optischen Moduls aus den Fig. 7 und 8 bei geöffnetem Gehäuse. Dabei liegt ein Splitter vor, bei welchem zwei PLC-Splitter mit einem Aufteilungsverhältnis von je 1:16 auf einem einzelnen Glaschip integriert sind.

Grundsätzlich sind in den Figuren gleiche Teile mit gleichen Bezugszeichen versehen.

### Wege zur Ausführung der Erfindung

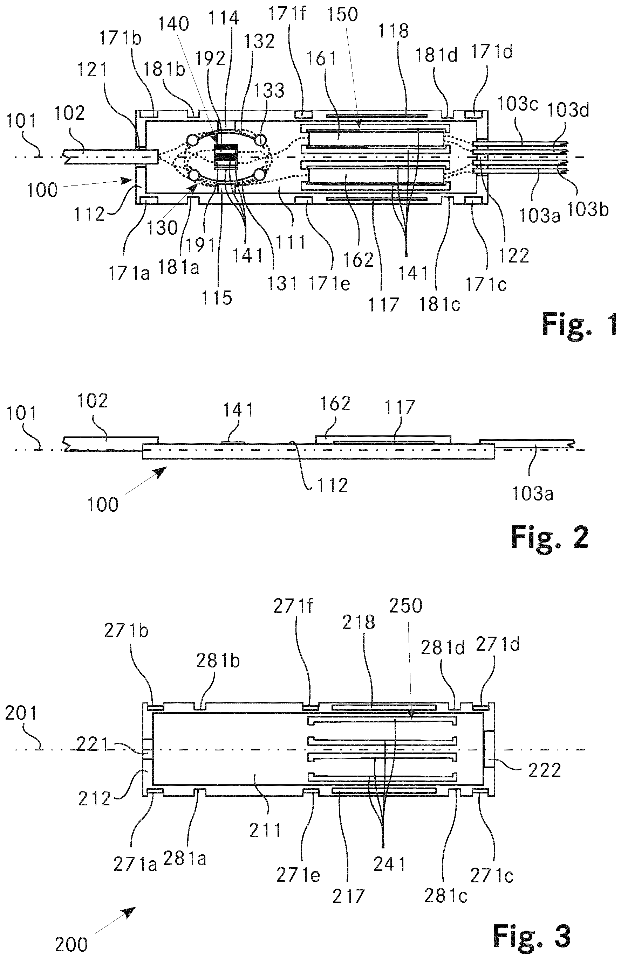

Fig. 1 zeigt eine Aufsicht auf die unteren Gehäusehälften 100 eines ersten optischen Moduls. Das untere Gehäuseteil 100 ist ein quaderförmiges Element mit einer im Wesentlichen quaderförmigen, zentralen Vertiefung 111, welche von einem erhöhten Randbereich 112 umgeben ist.

In Fig. 1 auf der linken Seite ist stirnseitig eine erste rinnenförmige Ausnehmung 121 mit einer konkavenWölbung im Randbereich 112 eingebracht, welche den Randbereich 112 entlang der Längsachse 101 vollständig durchbricht. Auf der gegenüberliegenden und in Fig. 1 rechten Seite ist stirnseitig eine zweite und etwas grössere rinnenförmige Ausnehmung 122 mit einer konkavenWölbung im Randbereich 112 eingebracht, welche den Randbereich 112 entlang der Längsachse 101 ebenfalls vollständig durchbricht.

In der rinnenförmigen Ausnehmung 121 ist ein optisches Faserkabel 102, in welchem zwei optische Fasern in einer Schutzhülle verlaufen, eingelegt. Die Schutzhülle des optischen Faserkabels 102 endet im Bereich der rinnenförmigen Ausnehmung 112, während sich die optischen Fasern (dargestellt als unterbrochene Linien) weiter ins Innere des Gehäuseteils 100 bzw. in ein Faserreservoir 130 erstrecken.

Am freien Ende des optischen Faserkabels 102 ist ein optischer Stecker oder eine optische Steckerbuchse angeschlossen (nicht gezeigt). Damit kann das optische Faserkabel 102 beispielsweise in der Vermittlungsstelle an weitere Netzwerkkomponenten angeschlossen werden. Eine Länge optischen Faserkabels 102 ausserhalb des Gehäuses misst beispielsweise 5 m.

In einem linken Bereich der Vertiefung 111 ist das Faserreservoir 130 in Form von zwei gegenüberliegenden elliptisch gekrümmten und nach oben (aus der Blattebene heraus ragenden) abstehenden Stegen 131, 132 angeordnet. An den oberen Kanten der Stege 131, 132 ragen zudem 4 kreisrunde Vorsprünge 133 (lediglich einer der 4 Vorsprünge ist mit einem Referenzzeichen versehen) in Richtung des Randbereichs 112. In gegenüberliegenden Bereichen der oberen Kanten des Randbereichs 112 sind zudem zwei recl<tecl<förmige Vorsprünge 114, 115 angeordnet, welche in Richtung der Stege 131, 132 ragen. Die Vorsprünge 133, 114, 115 dienen dazu, optische Fasern (unterbrochene Linien), welche im Faserreservoir 130 aufgenommen sind, in dieser zu halten. Das Faserreservoir 130 ist dabei so ausgebildet, dass die minimalen Krümmungsradien der optischen Fasern eingehalten werden.

In einem zentralen Bereich des Faserreservoirs 130 ist des Weiteren eine Spleisshalterung 140 für zwei Spleisse 191, 192 angeordnet. Die Spleisshalterung 140 besteht aus 3 parallel zueinander und nach oben (aus der Blattebene herausragenden) abstehenden Stegen 141 zwischen welchen die Spleisse 191, 192 festgeklemmt werden können. In den Spleissen 191, 192 sind die aus dem optischen Kabel 102 stammenden und im Faserreservoir 130 aufgenommenen optischen Fasern mit Anschlussfasern der Splitter 161, 162 verbunden. Bei den Splittern handelt es sich beispielsweise um PLC Splitter mit einem Aufteilungsverhältnis von 1:2.

In einem rechten Bereich der Vertiefung 111 ist eine Aufnahme 150 für die zwei Splitter 161, 162 angeordnet. Die Aufnahme 150 besteht aus je zwei parallelen und gegenüberliegenden, leistenförmigen Stegen 141, welche nach oben abstehen. Endseitig sind die vier Stege 141 an beiden Enden abgewinkelt. Die Abwinklungen dienen dazu, eine Bewegung der Splitter in der Längsrichtung (entlang der Längsachse 101) zu verhindern.

Das Faserreservoir 130 und die Splitter 161, 162 sind damit in einer Längsrichtung oder einer Richtung von der ersten rinnenförmigen Ausnehmung 121 (diese ist Bestandteil des ersten Kabeldurchlasses, wie nachstehend gezeigt) zur zweiten rinnenförmigen Ausnehmung 122 (diese ist Bestandteil des zweiten Kabeldurchlasses, wie nachstehend gezeigt) hintereinander im Gehäuse angeordnet.

Das Faserreservoir 130, die Spleisshalterung 140 und die Aufnahme 150 für die Splitter sind somit im ersten Gehäuseteil 100 in einer gemeinsamen Ebene auf der grössten Innenfläche des ersten Gehäuseteils 100 angeordnet.

In der zweiten rinnenförmigen Ausnehmung 102 sind vier optische Faserkabel 103a, 103b, 103c, 103d mit einem Aussendurchmesser von z.B. 1.4 mm angeordnet, wobei die Schutzhüllen der optischen Faserkabel 103a, 103b, 103c, 103d im Bereich der rinnenförmigen Ausnehmung 122 enden. In jedem der vier optischen Faserkabel verläuft jeweils eine optische Faser, welche mit den Splittern 161, 162 verbunden sind. Die optischen Fasern der Kabel 103a, 103b sind dabei mit dem einen Splitter 162 verbunden, während die optischen Fasern der Kabel 103c, 103d mit dem anderen Splitter 161 verbunden sind.

An den freien Enden der optischen Faserkabel 103a - d sind insbesondere optische Stecker oder optische Steckerbuchsen angeschlossen (nicht gezeigt). Damit können die optischen Faserkabel 103a - d beispielsweise an einen optischen Netzwerl<abschluss oder an weitere Netzwerkkomponenten angeschlossen werden. Eine Länge der optischen Kabel 103a - d ausserhalb des Gehäuses beträgt beispielsweise je 5 m.

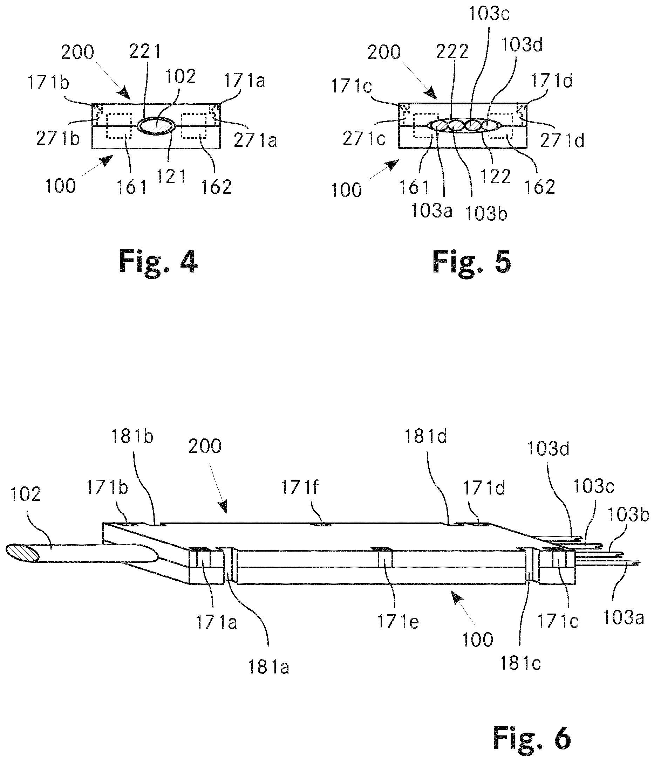

In den Eckbereichen des Gehäuseteils 100 ist neben der ersten rinnenförmigen Ausnehmung 112 beidseits je ein verrastbares Element in Form eines Rasthakens 171a, 171b (siehe auch Fig. 4 und 5) angeordnet. Die Rasthaken 171a, 171b ragen dabei nach oben (aus der Blattebene heraus) vom Gehäuseteil 100 weg. Baugleiche Rasthaken 171c, 171d, 171e, 171f sind in den gegenüberliegenden Ecken sowie mittig auf den gegenüberliegenden Längsseiten angebracht.

Weiter ist im Gehäuseteil 100 jeweils zwischen zwei der Rasthaken 171a - 171f an der Aussenseiten jeweils eine durchgehende Nut 181a, 181b, 181c, 181d angeordnet, welche senkrecht zur Blattebene verläuft.

Neben der Aufnahme 150 für die Splitter ragen längliche Positionierungsstege 117, 118, welche parallel zur Längsachse 101 verlaufen vom Randbereich 112 nach oben (aus der Blattebene heraus).

Mit Ausnahme der optischen Kabel 102, 103a-d, der optischen Fasern (unterbrochene Linien), der Spleisse 191, 192 und der Splitter 161, 162 ist das Gehäuseteil 100 als Spritzgussteil einstückig aus Kunststoff gefertigt.

Fig. 2 zeigt eine Seitenansicht des unteren Gehäuseteils 100 aus Fig. 1 aus der Richtung von der in Fig. 1 unteren Seite. Dabei ist zu erkennen, dass der vordere Splitter 162 die Ebene des Randbereichs 112 deutlich überragt. Dieser hervorstehende Bereich des Splitters wird beim Schliessen des Gehäuses in einer entsprechenden Aufnahme des oberen Gehäuseteils 200 (siehe Fig. 3) aufgenommen.

Fig. 3 zeigt eine Aufsicht auf die obere Gehäusehälfte 200 des ersten optischen Moduls. Das obere Gehäuseteil 200 ist ebenfalls ein quaderförmiges Element mit einer im Wesentlichen quaderförmigen, zentralen Vertiefung 211, welche gegenüber der Bodenebene der Vertiefung 211 von einem erhöhten Randbereich 212 umgeben ist. Die Längen, Breiten und Dicken des oberen Gehäuseteils 200 und des unteren Gehäuseteils 100 aus Fig. 1 sind im Wesentlichen identisch. Entsprechend handelt es sich bei den beiden in den Fig. 1 und 3 dargestellten Gehäuseteilen 100, 200 um Gehäusehälften.

In Fig. 3 auf der linken Seite ist stirnseitig eine erste rinnenförmige Ausnehmung 221 mit einer konkavenWölbung im Randbereich 212 eingebracht, welche den Randbereich 212 entlang der Längsachse 201 vollständig durchbricht. Die erste rinnenförmige Ausnehmung 221 im oberen Gehäuseteil 200 ist dabei bezüglich Form und Grösse im Wesentlichen identisch mit der ersten rinnenförmigen Ausnehmung 121 im unteren Gehäuseteil 100.

Auf der gegenüberliegenden und in Fig. 3 rechten Seite ist stirnseitig eine zweite und etwas grössere rinnenförmige Ausnehmung 222 mit einer konkaven Wölbung im Randbereich 212 eingebracht, welche den Randbereich 212 entlang der Längsachse 201 ebenfalls vollständig durchbricht. Die zweite rinnenförmige Ausnehmung 222 im oberen Gehäuseteil 200 ist dabei bezüglich Form und Grösse im Wesentlichen identisch mit der zweiten rinnenförmigen Ausnehmung 122 im unteren Gehäuseteil 100.

Wird das Gehäuse verschlossen indem das obere Gehäuseteil 200 auf das untere Gehäuseteil 100 gelegt wird, wird das optische Faserkabel 102 bezüglich seiner Querschnittsfläche im Bereich des Kabeldurchlasses je zu etwa 50 % in der unteren rinnenförmigen Ausnehmung 121 und der oberen rinnenförmigen Ausnehmung 221 aufgenommen und festgeklemmt (siehe auch Fig. 4 und 5). Analog dazu sind im Bereich der rinnenförmigen Ausnehmungen 122, 222 je etwa 50 % der Querschnittsfläche der optischen Faserkabel 103a, 103b, 103c, 103d in der unteren rinnenförmigen Ausnehmung 122 und etwa 50 % der Querschnittsfläche der optischen Faserkabel 103a, 103b, 103c, 103d in der oberen rinnenförmigen Ausnehmung 222 aufgenommen und gehalten.

In einem rechten Bereich der Vertiefung 211 ist eine Aufnahme 250 für zwei Splitter angeordnet. Die Aufnahme 250 besteht aus je zwei parallelen und gegenüberliegenden, leistenförmigen Stegen 241, welche nach oben abstehen. Endseitig sind die vier Stege 241 an beiden Enden abgewinkelt. Die Abwinklungen dienen dazu, eine Bewegung der Splitter in der Längsrichtung (entlang der Längsachse 201) zu verhindern. Die Aufnahme 250 im oberen Gehäuseteil 200 ist im Wesentlichen baugleich mit der Aufnahme 150 im unteren Gehäuseteil 100. Wird das Gehäuse verschlossen, indem das obere Gehäuseteil 200 auf das untere Gehäuseteil 100 gelegt wird, werden die Splitter 161, 162 je zu etwa 50 Volumen-% in der unteren Aufnahme 150 und der oberen Aufnahme 250 aufgenommen und von diesen in Position gehalten.

In den Eckbereichen des oberen Gehäuseteils 210 ist neben der ersten rinnenförmigen Ausnehmung 212 beidseits je ein zweites Verbindungselement in Form einer Vertiefung 271a, 271b mit einem Absatz angeordnet. Die Vertiefungen 271a, 271b sind komplementär zu den Rasthaken 171a, 171b ausgebildet und werden bei geschlossenem Gehäuse von diesen umgriffen, so dass eine formschlüssige Verbindung vorliegt. Baugleiche Vertiefungen 271c, 271d, 271e, 271f sind in den gegenüberliegenden Ecken sowie mittig auf den gegenüberliegenden Längsseiten angebracht.

Weiter ist im Gehäuseteil 100 jeweils zwischen zwei der Verbindungen 271a - 271f an den Aussenseiten jeweils eine durchgehende Nut 281a, 281b, 281c, 281d angeordnet, welche senkrecht zur Blattebene verläuft. Die Nuten 281a, 281b, 281c, 281d des oberen Gehäuseteils 200 kommen bei geschlossenem Gehäuse direkt über den Nuten 181a, 181b, 181c, 181d des unteren Gehäuseteils zu liegen, so dass jeweils durchgehende Nuten gebildet werden. Damit können mehrere optische Module verbunden werden, z.B. über eine Führungsschiene und/oder Kabelbinder.

Neben der Aufnahme 250 für die Splitter sind längliche Vertiefungen 217, 218, welche parallel zur Längsachse 201 verlaufen in den Randbereich 212 eingebracht. Die länglichen Vertiefungen 217, 218 nehmen bei geschlossenem Gehäuse die länglichen Positionierungsstege 117, 118 des ersten Gehäuseteils 100 auf. Damit wird in geschlossenem Zustand eine exakte Positionierung der beiden Gehäuseteile 100, 200 erreicht.

Das Gehäuseteil 200 ist ebenfalls als Spritzgussteil einstückig aus Kunststoff gefertigt.

Fig. 4 zeigt das erste optische Modul mit geschlossenem Gehäuse von der linken Stirnseite her betrachtet (diese entspricht in den Fig. 1 und 3 den linken Seiten). Dabei liegt das obere Gehäuseteil 200 aus Fig. 3 auf dem unteren Gehäuseteil 100 aus Fig. 1 und die Rasthaken 171a, 171b greifen formschlüssig in die Vertiefungen 271a, 271b, so dass die beiden Gehäuseteile form- und kraftschlüssig zusammengehalten werden. Die beiden Gehäusehälften 100, 200 sind zusätzlich entlang dem gesamten Kontaktbereich mit einem Klebstoff (nicht dargestellt) verklebt.

Die rinnenförmige Ausnehmung 121 im unteren Gehäuseteil 100 liegt dabei direkt gegenüber der rinnenförmigen Ausnehmung 221 im oberen Gehäuseteil 200, so dass ein im Querschnitt ungefähr ovaler erster Kabeldurchlass für das erste optische Faserkabel 102 gebildet wird. Das erste optische Faserkabel 102 liegt dabei im Bereich des I<abeldurchlasses bezüglich seiner Querschnittsfläche ca. zur Hälfte in der Ausnehmung 121 und ca. zur Hälfte in der Ausnehmung 221. Ein Klebstoff (nicht dargestellt) dichtet den Kontaktbereich zwischen optischem Kabel 102 und dem Kabeldurchlass zusätzlich ab.

Fig. 5 zeigt das erste optische Modul mit geschlossenem Gehäuse von der rechten Stirnseite her betrachtet (diese entspricht in den Fig. 1 und 3 den rechten Seiten). Dabei liegt das obere Gehäuseteil 200 auf dem unteren Gehäuseteil 100 und die Rasthaken 171c, 171d greifen formschlüssig in die Vertiefungen 271c, 271d, so dass die beiden Gehäuseteile form- und kraftschlüssig zusammengehalten werden.

Die rinnenförmige Ausnehmung 122 im unteren Gehäuseteil 100 liegt dabei direkt gegenüber der rinnenförmigen Ausnehmung 222 im oberen Gehäuseteil 200, so dass ein im Querschnitt ungefähr ovaler zweiter Kabeldurchlass für die vier optischen Faserkabel 103a, 103b, 103c, 103d gebildet wird. Die optischen Faserkabel 103a, 103b, 103c, 103d liegen dabei im Bereich des I<abeldurchlasses bezüglich ihrer gesamten Querschnittsfläche ca. zur Hälfte in der Ausnehmung 122 und ca. zur Hälfte in der Ausnehmung 222. Ein Klebstoff (nicht dargestellt) dichtet den Kontaktbereich zwischen optischen Faserkabeln 103a - d und dem Kabeldurchlass zusätzlich ab.

Fig. 6 zeigt eine perspektivische Darstellung des ersten optischen Moduls aus den Fig. 4 und 5.

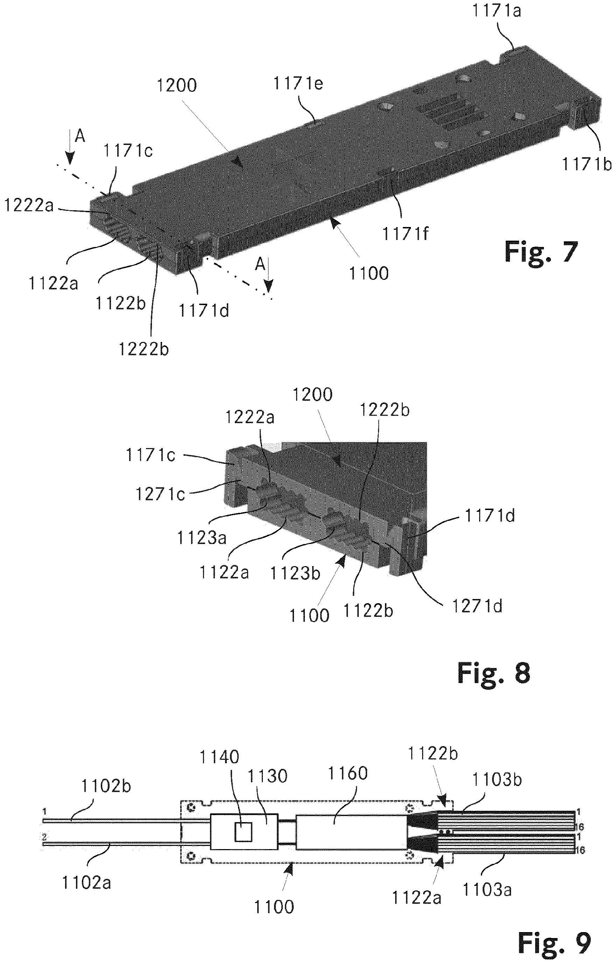

Fig. 7 zeigt eine perspektivische Darstellung eines zweiten optischen Moduls. Dieses verfügt über ein unteres Gehäuseteil 1100 sowie ein oberes Gehäuseteil 1200, wobei es sich jeweils um Gehäusehälften handelt. Die beiden Gehäusehälften 1100, 1200 werden durch drei Paare von gegenüberliegenden Rasthaken 1171a, 1171b; 1171c, 1171d, 1171 e, 1171f formschlüssig zusammengehalten. Dies analog wie die Gehäusehälften 100, 200 des ersten optischen Moduls. Soweit im Folgenden nicht anders beschrieben, sind die Gehäuseteile 1100, 1200 des zweiten Moduls im Wesentlichen baugleich mit den Gehäusehälften 100, 200 des ersten optischen Moduls.

Auf der sichtbaren Stirnseite sind nebeneinander zwei rinnenförmige Ausnehmungen 1122a, 1122b im unteren Gehäuseteil 1100 sowie zwei rinnenförmige Ausnehmungen 1222a, 1222b im oberen Gehäuseteil 1200 eingebracht. Die rinnenförmige Ausnehmung 1122a liegt dabei direkt gegenüber der rinnenförmigen Ausnehmung 1222a und bildet einen ersten ausgangseitigen Kabeldurchlass für mehrere optische Faserkabel. Die rinnenförmige Ausnehmung 1122a liegt direkt gegenüber der rinnenförmigen Ausnehmung 1222b und bildet einen zweiten ausgangseitigen I<abeldurchlass für mehrere optische Faserkabel. Im Gegensatz zum ersten optischen Modul aus den Fig. 1 - 6 verfügt das zweite optische Modul aus Fig. 7 somit über zwei getrennte I<abeldurchlässe auf einer Stirnseite.

Fig. 8 zeigt eine Detailansicht des zweiten optischen Moduls aus Fig. 7 wobei die Querschnittsfläche entlang der Linie A - A in Fig. 7 sichtbar ist. Dabei ist zu erkennen, dass die Ausnehmungen 1122a, 1122b, 1222a, 1222b eine wellenförmige Oberfläche 1123a, 1123b aufweisen. Die Wellenkämme der Oberflächen 1123a, 1123b verlaufen dabei in einer Richtung parallel zur Längsachse des Gehäuses bzw. der beiden Gehäuseteile 1100, 1200. In der wellenförmigen Oberfläche kann eine Vielzahl von beispielsweise 16 einzelnen und teilweise komplementären optischen Faserkabeln (in Fig. 7 nicht gezeigt) eingebettet werden. Damit liegen diese in einer definierten Position in den I<abeldurchlässen vor.

Fig. 9 zeigt eine schematische Darstellung des Innenlebens des zweiten optischen Moduls aus den Fig. 7 und 8 bei geöffnetem Gehäuse bzw. ohne das zweite Gehäuseteil 1200. Dabei gelangen von der in Fig. 9 linken Seite her zwei parallel verlaufende optische Faserkabel 1102a, 1102b mit je einer optischen Faser durch zwei getrennte I<abeldurchlässe ins Innern des Gehäuses. Die in den optischen Faserkabeln 1102a, 1102b verlaufenden optischen Fasern werden dann durch das Faserreservoir 1130 geführt, wo Überlängen aufgenommen sind. Die Spleisse, mit welchen die optischen Fasern mit den optischen Fasern des Splitters 1160 verbunden sind, sind in einer zentralen Spleisshalterung 1140 fixiert.

Beim optischen Splitter 1160 handelt es sich um einen Splitter, bei welchem zwei PLC-Splitter mit einem Aufteilungsverhältnis von je 1:16 auf einem einzelnen Glaschip integriert sind.

Auf der in Fig. 9 rechten Seite ist in der einen rinnenförmigen Ausnehmung 1122a ein Bündel von 16 optischen Faserkabeln 1103a angeordnet, wobei die Schutzhüllen der optischen Faserkabel 1 103a im Bereich der rinnenförmigen Ausnehmung 1122a enden. In jedem der 16 optischen Faserkabel verläuft jeweils eine optische Faser, welche mit einem der beiden PLC-Splitter des Splitters 1160 verbunden sind.

In der anderen rinnenförmigen Ausnehmung 1122b ist ein Bündel von 16 weiteren optischen Faserkabeln 1103b angeordnet, wobei die Schutzhüllen der optischen Faserkabel 1 103b im Bereich der rinnenförmigen Ausnehmung 1122b enden. In jedem der 16 optischen Faserkabeln verläuft ebenfalls jeweils eine optische Faser, welche mit dem anderen der beiden PLC-Splitter des Splitters 1160 verbunden sind.

Die optischen Faserkabel 1103a, 1103b sind teilweise in den Vertiefungen der wellenförmigen Oberfläche der Ausnehmungen 1122a, 1122b eingebettet.

Die gezeigten Ausführungsbeispiele stellen lediglich illustrative und nicht einschränken zu verstehende Beispiele dar, welche im Rahmen der Erfindung beliebig abgewandelt werden können.

So kann z.B. beim ersten optischen Modul aus den Fig. 1 - 6 ein Splitter mit einem anderen Aufteilungsverhältnis eingesetzt werden, beispielsweise mit einem Verhältnis von 1:16 oder 1:32. Auch können die zwei Splitter mit unterschiedlichen Aufteilungsverhältnissen oder eine andere Anzahl an Splittern, z.B. 1, 3, 4, 5 oder noch mehr Splitter vorliegen. Ebenfalls möglich ist es, einen Splitter einzusetzen, welcher wie bei Fig. 9 beschrieben mehrere Splitter auf einem gemeinsamen Substrat beinhaltet.

Bei der Ausführungsform der Fig. 9 können zudem anstelle des Splitters 1160 auch zwei separate Splitter mit einem Aufteilungsverhältnis von 1:16 oder einem anderen Aufteilungsverhältnis vorgesehen werden.

Des Weiteren können die rinnenförmigen Ausnehmungen 121, 122, 221, 222 in den Fig. 1 - 3 ebenfalls eine wellenförmige Oberfläche aufweisen, wie dies in Fig. 7 und 8 gezeigt ist.

In der Ausführungsform der Fig. 1 - 3 können von den linken Seiten her auch zwei oder mehr separate optische Faserkabel mit je einer oder mehreren optischen Fasern in das Gehäuse eingeführt werden. Die zwei oder mehr separaten optischen Faserkabel können dabei durch einen einzigen Kabeldurchlass oder durch mehrere getrennte Kabeldurchlässe, welche insbesondere durch gegenüberliegende Ausnehmungen in den beiden Gehäusehälften gebildet werden, geführt werden.

Auch im Rahmen der Erfindung liegt es, eine Spleisshalterung für mehr als zwei Spleisse, z.B. für drei, vier oder noch mehr Spleisse, vorzusehen.

Grundsätzlich können die Gehäuseteile 100, 200, 1100, 1200 auch eine andere Form aufweisen, z.B. eine halbzylindrische Form. Auch nicht zwingend ist es, dass die Gehäuseteile als Gehäusehälften ausgestaltet sind. Beispielsweise kann ein erstes Gehäuseteil eine grössere Dicke aufweisen als das zweite Gehäuseteil.

Ebenso können anstelle der Rasthaken andere Verbindungselemente zum form- und/oder kraftschlüssigen Verbinden vorgesehen werden. Auch möglich ist es prinzipiell, auf Verbindungselemente zum form- und/oder kraftschlüssigen Verbinden verzichten und die Gehäuseteile ausschliesslich stoffschlüssig zu verbinden.

Anstelle von optischen Steckern oder Steckerbuchsen können die optischen Kabel 102, 103a - d bei der Ausführungsform der Fig. 1 - 3 auch andere Vorrichtung zum Verbinden der Faserkabel mit weiteren optischen Komponenten aufweisen. Möglich ist es auch, die optischen Faserkabel an den freien Enden durch Spleissverbindungen an die weiteren optischen Komponenten anzuschliessen.

Zusammenfassend ist festzustellen, dass neue optische Module mit äusserst kompakten und gut stapelbaren Bauformen bereitgestellt wurden. Die optischen Module bieten zuverlässige und flexible Anschlussmöglichkeiten für optische Faserkabel. Dabei können Biegebelastungen auf die optischen Fasern reduziert werden und allfällige Überlängen der optischen Fasern problemlos und platzsparend im optischen Modul aufgenommen werden.

## Patentansprüche

1. Optisches Modul, insbesondere in Form einer passiven optischen Netzwerkkomponente, umfassend ein Gehäuse (100, 200), bestehend aus wenigstens zwei Gehäuseteilen (100, 200), wobei im Gehäuse (100, 200) mindestens ein optischer Splitter (161, 162), mindestens eine Spleisshalterung (140) sowie mindestens ein Faserreservoir (130) zur Aufnahme von optischen Fasern vorliegen, wobei das Gehäuse (100, 200) auf einer ersten Seite wenigstens einen ersten I<abeldurchlass (121, 221) aufweist, über welchen wenigstens ein erstes optisches Faserkabel (102) in das Gehäuse (100, 200) eingeführt werden kann und auf einer gegenüberliegenden Gehäuseseite wenigstens ein zweiter I<abeldurchlass (122, 222) vorliegt, über welchen wenigstens ein zweites optisches I<abel (103a - d) in das Gehäuse (100, 200) eingeführt werden kann, wobei das Faserreservoir (130) und der mindestens eine optische Splitter (161, 162) in einer Richtung vom ersten Kabeldurchlass zum zweiten Kabeldurchlass (101) hintereinander im Gehäuse (100, 200) angeordnet sind, **dadurch gekennzeichnet, dass** das Faserreservoir (130), die wenigstens eine Spleisshalterung (140) und wenigstens eine erste Aufnahme (150) für den wenigstens einen optischen Splitter (161, 162) in einem ersten Gehäuseteil (100) auf der grösster Innenfläche des ersten Gehäuseteils (100) in einer gemeinsamen Ebene des Gehäuseteils (100) angeordnet sind.

2. Optisches Modul nach Anspruch 1, **dadurch gekennzeichnet, dass** die mindestens eine Spleisshalterung (140) in einem zentralen Bereich des Faserreservoirs (130) angeordnet ist, insbesondere so, dass im Faserreservoir (130) aufgenommene optische Fasern die mindestens eine Spleisshalterung (140) in einer Ebene umgeben.

3. Optisches Modul nach wenigstens einem der Ansprüche 1 - 2, **dadurch gekennzeichnet, dass** das Gehäuse (100, 200) über eine oder mehrere mechanische Verbindungen (171a, 271a, 171b, 271b, 171c, 271c, 171d, 271d) verfügt, über welche die wenigstens zwei Gehäuseteile (100, 200) kraft- und/oder formschlüssig verbindbar sind.

4. Optisches Modul nach Anspruch 3, **dadurch gekennzeichnet, dass** das Gehäuse (100, 200) aus genau zwei Gehäuseteilen (100, 200) besteht.

5. Optisches Modul nach Anspruch 3 oder 4, **dadurch gekennzeichnet, dass** die wenigstens eine mechanische Verbindung als Rastverbindungen ausgestaltet sind, umfassend ein erstes Verbindungselement in Form eines verrastbaren Elements (171a, 171b, 171c, 171d), insbesondere in Form eines Rasthakens, welches am ersten Gehäuseteil (100) angeordnet ist und ein zweites Verbindungselement in Form eines komplementären Elements, insbesondere in Form eines Vorsprungs und/oder einer Vertiefung (271a, 271b, 271c, 271d), welches am zweiten Gehäuseteil (200) angeordnet ist, mit welchem das verrastbare Element form- und/oder kraftschlüssig zusammenwirken kann.

6. Optisches Modul nach wenigstens einem der Ansprüche 3 - 5, **dadurch gekennzeichnet, dass** beidseits des wenigstens einen ersten I<abeldurchlasses und/oder beidseits des wenigstens einen zweiten I<abeldurchlasses je eine mechanische Verbindung (171a, 271a, 171b, 271b, 171c, 271c, 171d, 271d, insbesondere ein Rastverbindung, vorliegt.

7. Optisches Modul nach wenigstens einem der Ansprüche 3 - 6, **dadurch gekennzeichnet, dass** wenigstens einer der I<abeldurchlässe, insbesondere beide oder alle I<abeldurchlässe, durch gegenüberliegende Ausnehmungen (121, 221, 122, 222) in den mindestens zwei Gehäuseteilen (100, 200) gebildet werden.

8. Optisches Modul nach wenigstens einem der Ansprüche 3 - 7, **dadurch gekennzeichnet, dass** es sich bei den wenigstens zwei Gehäuseteilen (100, 200) um zwei Gehäusehälften handelt, welche hinsichtlich des äusseren Gehäusevolumens je zwischen 40 - 60 Volumen-%, im Speziellen 45 - 55 Volumen-%, des Gehäuses ausmachen.

9. Optisches Modul nach wenigstens einem der Ansprüche 1 - 8, **dadurch gekennzeichnet, dass** der optische Splitter (161, 162) ein passiver optischer Splitter, insbesondere basierend auf einer planaren Lichtwellenleiterstruktur, PLC-Splitter, ist, welcher für die Übertragung von optischen Signalen mit einer Wellenlänge von im Bereich von 1260 - 1650 nm ausgelegt ist und wobei der optische Splitter bevorzugt ein Aufteilungsverhältnis im Bereich von 1:n aufweist, wobei im Besonderen n = 2 - 64, im Speziellen 8 - 32 oder 16, ist.

10. Optisches Modul nach wenigstens einem der Ansprüche 1 - 9, **dadurch gekennzeichnet, dass** im Gehäuse (100, 200) zwei oder mehr optische Splitter (161, 162) vorliegen, wobei die zwei oder mehr optischen Splitter (161, 162) auf einem gemeinsamer Substrat integriert sind.

11. Optisches Modul nach wenigstens einem der Ansprüche 1 - 10, **dadurch gekennzeichnet, dass** wenigstens ein erstes optisches Faserkabel (102) durch den wenigstens einen ersten I<abeldurchlass (121, 221) ins Innere des Gehäuses (100, 200) geführt ist und im wenigstens einen ersten I<abeldurchlass festgeklemmt und/oder darin stoffschlüssig verbunden ist und **dadurch gekennzeichnet, dass** wenigstens ein zweites optisches Faserkabel (103a - d) ist im wenigstens einen zweiten I<abeldurchlass (122, 222) festgeklemmt und/oder darin stoffschlüssig verbunden ist.

12. Optisches Modul nach den Ansprüchen 7 und 11, **dadurch gekennzeichnet, dass** das wenigstens eine erste optische Faserkabel (102) in den gegenüberliegenden Ausnehmungen (121, 221) in den mindestens zwei Gehäuseteilen (100, 200), welche den wenigstens einen ersten I<abeldurchlass bilden, aufgenommen und befestigt ist und **dadurch gekennzeichnet, dass** das wenigstens eine zweite optische Faserkabel (103a - d) in den gegenüberliegenden Ausnehmungen (122, 222) in den mindestens zwei Gehäuseteilen (100, 200), welche den wenigstens einen zweiten I<abeldurchlass bilden, aufgenommen und befestigt ist.

13. Optisches Modul nach Anspruch 7 und wenigstens einem der Ansprüche 11 - 12, **dadurch gekennzeichnet, dass** die optischen Faserkabel (102, 103a - d) und die Ausnehmungen (121, 221, 122, 222) in den beiden Gehäuseteilen (100, 200) so aufeinander abgestimmt sind, dass wenn das Gehäuse geschlossen ist, im Bereich des I<abeldurchlasses die gesamte Querschnittsfläche aller in einem I<abeldurchlass vorliegenden optischen Faserkabel zu 30 - 70 %, insbesondere zu 40 -60 %, im Speziellen zu 45 - 55 %, in einer Ausnehmung (121, 122) des ersten Gehäuseteils (100) vorliegt und zu 70 - 30 %, insbesondere zu 60 - 40 %, im Speziellen zu 55 - 45 %, in einer gegenüberliegenden Ausnehmung (221, 222) im zweiten Gehäuseteil (200) vorliegt.

14. Verfahren zur Herstellung eines optischen Moduls nach wenigstens einem der Ansprüche 1 - 13, umfassend die folgenden Schritte:
a) Bereitstellen eines Gehäuses (100, 200) für das optische Modul wobei das Gehäuse mindestens eine Spleisshalterung (140), mindestens ein Faserreservoir (130) zur Aufnahme von optischen Fasern und mindestens eine Aufnahme (150) für einen optischen Splitter umfasst und wobei das Gehäuse (100, 200) auf einer ersten Seite wenigstens einen ersten I<abeldurchlass (121, 221) aufweist über welchen wenigstens ein erstes optisches Faserkabel in das Gehäuse (100, 200) eingeführt werden kann und auf einer gegenüberliegenden Gehäuseseite wenigstens ein zweiter I<abeldurchlass (122, 222) vorliegt, über welchen wenigstens ein zweites optisches I<abel in das Gehäuse (100, 200) eingeführt werden kann und wobei das Faserreservoir (130) und die mindestens eine Aufnahme (150, 250) für einen optischen Splitter in einer Richtung vom ersten I<abeldurchlass zum zweiten I<abeldurchlass hintereinander im Gehäuse angeordnet sind;
b) Bereitstellen eines optischen Splitters (161, 162);
c) Einbringen von einem oder mehreren optischen Faserkabeln (102, 103a - d) in die I<abeldurchlässe;
d) Verbinden von freiliegenden optischen Fasern eines optischen Faserkabels (102, 103a - d) durch eine Spleissverbindung mit optischen Anschlussfasern des optischen Splitters (161, 162);
e) Einlegen des optischen Splitters (161, 162) in die dafür vorgesehene Aufnahme (150, 250);
f) Aufnehmen von Überlängen der optischen Fasern der optischen Faserkabel (102, 103a - d) und/oder der Anschlussfasern des optischen Splitters (161, 162);
g) Einlegen der gespleissten Stelle in die Spleissaufnahme (140);
h) Verschliessen des Gehäuses (100, 200).

15. Verwendung eines optischen Moduls gemäss nach wenigstens einem der Ansprüche 1 - 13 zum Übertragen von optischen Signalen, insbesondere optischen Signalen mit Wellenlängen im Bereich von 1260 - 1650 nm.

## Claims

1. Optical module, in particular in the form of a passive optical network component, comprising a housing (100, 200) consisting of at least two housing parts (100, 200), wherein at least one optical splitter (161, 162), at least one splice holder (140) and at least one fiber reservoir (130) for receiving optical fibers are arranged in the housing, the housing (100, 200) having on a first side at least one first cable passage (121, 221), via which at least one first optical fiber can be introduced into the housing (100, 200) and on an opposite housing side there is at least one second cable passage (122, 222) via which at least one second optical cable (103a-d) can be introduced into the housing (100, 200), the fiber reservoir (130) and the at least one optical splitter (161, 162) being arranged one behind the other in the housing (100, 200) in a direction from the first cable passage to the second cable passage (101), **characterized in that** the fiber reservoir (130), the at least one splice holder (140) and at least a first receptacle (150) for the at least one optical splitter (161, 162) are arranged in a first housing part (100) on the largest inner surface of the first housing part (100) in a common plane of the housing part (100).

2. Optical module according to claim 1, **characterized in that** the at least one splice holder (140) is arranged in a central region of the fiber reservoir (130), in particular such that optical fibers received in the fiber reservoir (130) surround the at least one splice holder (140) in a plane..

3. Optical module according to at least one of claims 1-2, **characterized in that** the housing (100, 200) has one or more mechanical connections (171a, 271a, 171b, 271b , 171c, 271c, 171d, 271d) via which the at least two housing parts (100, 200) can be connected in a force-fitting and/or form-fitting manner.

4. Optical module according to claim 3, **characterized in that** the housing (100, 200) comprises exactly two housing parts (100, 200).

5. Optical module according to claim 3 or 4, **characterized in that** the at least one mechanical connection is designed as latching connections, comprising a first connecting element in the form of a latchable element (171a, 171b, 171c, 171d), in particular in the form of a latch hook, which is arranged on the first housing part (100) and a second connecting element in the form of a complementary element, in particular in the form of a projection and/or a depression (271a, 271b, 271c, 271d), which is arranged on the second housing part (200) and with which the latchable element can interact in a form-fitting and/or force-fitting manner.

6. Optical module according to at least one of claims 3-5, **characterized in that** a mechanical connection (171a, 271a, 171b, 271b, 171c, 271c, 171d, 271d, in particular a latching connection is present on both sides of the at least one first cable passage and/or on both sides of the at least one second cable passage.

7. Optical module according to at least one of claims 3-6, **characterized in that** at least one of the cable passages, in particular both or all cable passages, are formed by opposite recesses (121, 221, 122, 222) in the at least two housing parts (100, 200).

8. Optical module according to at least one of claims 3-7, **characterized in that** the at least two housing parts (100, 200) are two housing halves which, with respect to the outer housing volume, each make up between 40-60% by volume, in particular 45-55% by volume, of the housing.

9. Optical module according to at least one of claims 1-8, **characterized in that** the optical splitter (161, 162) is a passive optical splitter, in particular based on a planar optical waveguide structure, PLC splitter, which is designed for the transmission of optical signals with a wavelength in the range of 1260-1650 nm and wherein the optical splitter preferably comprises a splitting ratio in the range of 1:n, wherein in particular n = 2 - 64, in particular 8 - 32 or 16.

10. Optical module according to at least one of claims 1-9, **characterized in that** two or more optical splitters (161, 162) are present in the housing (100, 200), wherein the two or more optical splitters (161, 162) are integrated on a common substrate.

11. Optical module according to at least one of claims 1-10, **characterized in that** at least one first optical fiber cable (102) is guided through the at least one first cable passage (121, 221) into the interior of the housing (100, 200) and is clamped in the at least one first cable passage and/or is materially bonded therein, and **characterized in that** at least one second optical fiber cable (103a - d) is clamped in the at least one second cable passage (122, 222) and/or is materially bonded therein..

12. Optical module according to claims 7 and 11, **characterized in that** the at least one first optical fiber cable (102) is received and attached in the opposite recesses (121, 221) in the at least two housing parts (100, 200) which form the at least one first cable passage, and **characterized in that** the at least one second optical fiber cable (103a - d) is received and attached in the opposite recesses (122, 222) in the at least two housing parts (100, 200) which form the at least one second cable passage.

13. Optical module according to claim 7 and at least one of claims 11 - 12, **characterised in that** the optical fibre cables (102, 103a-d) and the recesses (121, 221, 122, 222) in the two housing parts (100, 200) are matched to one another in such a way that when the housing is closed, in the area of the cable passage, 30-70%, in particular 40-60%, in particular 45-55%, of the total cross-sectional area of all the optical fibre cables present in a cable passage is present in a recess (121, 122) in the first housing part (100) and 70-30%, in particular 60-40%, in particular 55-45%, is present in an opposite recess (221, 222) in the second housing part (200)..

14. A method of producing an optical module according to at least one of claims 1 - 13, comprising the following steps:
a) Providing a housing (100, 200) for the optical module, wherein the housing comprises at least one splice holder (140), at least one fiber reservoir (130) for receiving optical fibers, and at least one receptacle (150) for an optical splitter, and wherein the housing (100, 200) comprises on a first side at least one first cable passage (121, 221) via which at least one first optical fiber cable can be introduced into the housing (100, 200) and on an opposite housing side at least one second cable passage (122, 222) is present through which at least one second optical cable can be introduced into the housing (100, 200), and wherein the fiber reservoir (130) and the at least one receptacle (150, 250) for an optical splitter are arranged one behind the other in the housing in a direction from the first cable passage to the second cable passage;
b) Providing an optical splitter (161, 162);
c) Inserting one or more optical fiber cables (102, 103a-d) into the cable passages;
d) Connecting exposed optical fibers of an optical fiber cable (102, 103a-d) to optical fibers of the optical splitter (161, 162) by means of a splice connection;
e) Inserting the optical splitter (161, 162) into the intended receptacle (150, 250);
f) Accommodating excess lengths of the optical fibers of the optical fiber cables (102, 103a-d) and/or the pigtails of the optical splitter (161, 162);
g) Inserting the spliced area into the splice holder (140);
h) Closing the housing (100, 200).

15. Use of an optical module according to at least one of claims 1-13 for transmitting optical signals, in particular optical signals with wavelengths in the range of 1260-1650 nm.

## Revendications

1. Module optique, en particulier sous la forme d'un composant de réseau optique passif, comprenant un boîtier (100, 200), constitué d'au moins deux compartiments de boîtier (100, 200), dans lequel dans le boîtier (100, 200) se trouvent au moins un splitter optique (161, 162), au moins un porte-épissure (140) ainsi qu'au moins un réservoir de fibres (130) pour recevoir des fibres optiques, dans lequel le boîtier (100, 200) présente sur un premier côté au moins un premier passage de câble (121, 221), par le biais duquel au moins un premier câble à fibres optiques (102) peut être inséré dans le boîtier (100, 200) et au moins un deuxième passage de câble (122, 222) se trouvant sur un côté de boîtier opposé, par le biais duquel au moins un deuxième câble optique (103a -d) peut être inséré dans le boîtier (100, 200), dans lequel le réservoir de fibres (130) et l'au moins un splitter (161, 162) sont disposés les uns derrière les autres dans le boîtier (100, 200) dans une direction allant du premier passage de câble au deuxième passage de câble (101), **caractérisé en ce que** le réservoir de fibres (130), l'au moins un porte-épissure (140) et au moins un premier logement (150) pour l'au moins un splitter (161, 162) sont disposés dans un premier compartiment de boîtier (100) sur la plus grande surface intérieure du premier compartiment de boîtier (100) dans un plan commun du compartiment de boîtier (100).

2. Module optique selon la revendication 1, **caractérisé en ce que** l'au moins un porte-épissure (140) est disposé dans une zone centrale du réservoir de fibres (130), en particulier de telle sorte que des fibres optiques reçues dans le réservoir de fibres (130) entourent l'au moins un porte-épissure (140) dans un plan.

3. Module optique selon au moins l'une des revendications 1-2, **caractérisé en ce que** le boîtier (100, 200) dispose d'une ou de plusieurs liaisons mécaniques (171a, 271a, 171b, 271b, 171c, 271c, 171d, 271d), par le biais desquelles les au moins deux compartiments de boîtier (100, 200) sont configurés pour pouvoir être engagés par force et/ou par complémentarité de forme.

4. Module optique selon la revendication 3, **caractérisé en ce que** le boîtier (100, 200) est constitué d'exactement deux compartiments de boîtier (100, 200).

5. Module optique selon la revendication 3 ou 4, **caractérisé en ce que** l'au moins une liaison mécanique est configurée sous la forme de liaisons par encliquetage, comprenant un premier élément de liaison sous la forme d'un élément configuré de manière à pouvoir être encliqueté (171a, 171b, 171c, 171d), en particulier sous la forme d'un crochet d'encliquetage, qui est disposé sur le premier compartiment de boîtier (100) et un deuxième élément de liaison sous la forme d'un élément complémentaire, en particulier sous la forme d'une saillie et/ou d'un renfoncement (271a, 271b, 271c, 271d), qui est disposé sur le deuxième compartiment de boîtier (200), avec lequel l'élément encliquetable est configuré de manière à pouvoir coopérer par complémentarité de forme et/ou par force.

6. Module optique selon au moins l'une des revendications 3 - 5, **caractérisé en ce qu'**une liaison mécanique respective (171a, 271a, 171b, 271b, 171c, 271c, 171d, 271d), en particulier une liaison par encliquetage, est présente des deux côtés de l'au moins un premier passage de câble et/ou des deux côtés de l'au moins un deuxième passage de câble.

7. Module optique selon au moins l'une des revendications 3-6, **caractérisé en ce qu'**au moins l'un des passages de câble, en particulier les deux ou tous les passages de câble, sont formés par des évidements opposés (121, 221, 122, 222) dans les au moins deux compartiments de boîtier (100, 200).

8. Module optique selon au moins l'une des revendications 3 - 7, **caractérisé en ce que** les au moins deux compartiments de boîtier (100, 200) sont deux moitiés de boîtier, qui représentent chacune entre 40 - 60 % en volume, en particulier 45 - 55 % en volume, du boîtier en ce qui concerne le volume extérieur du boîtier.

9. Module optique selon au moins l'une des revendications 1-8, **caractérisé en ce que** le splitter optique (161, 162) est un splitter optique passif, en particulier basé sur une structure plane de guide d'ondes optiques, splitter PLC, qui est conçu pour la transmission de signaux optiques avec une longueur d'onde dans la plage de 1260 - 1650 nm et dans lequel le splitter optique présente de préférence un rapport de division dans la plage de 1:n, dans lequel en particulier n = 2 - 64, spécialement 8 - 32 ou 16.

10. Module optique selon au moins l'une des revendications 1-9, **caractérisé en ce que** deux splitters optique ou plus (161, 162) sont présents dans le boîtier (100, 200), dans lequel les deux splitters optique ou plus (161, 162) sont intégrés sur un substrat commun.

11. Module optique selon au moins l'une des revendications 1 - 10, **caractérisé en ce qu'**au moins un premier câble à fibres optiques (102) est guidé à travers l'au moins un premier passage de câble (121, 221) à l'intérieur du boîtier (100, 200) et est serré dans l'au moins un premier passage de câble et/ou y est engagé par liaison de matière, et **caractérisé en ce qu'**au moins un deuxième câble à fibres optiques (103a -d) est serré dans l'au moins un deuxième passage de câble (122, 222) et/ou y est engagé par liaison de matière.

12. Module optique selon les revendications 7 et 11, **caractérisé en ce que** l'au moins un premier câble à fibres optiques (102) est reçu et fixé dans les évidements opposés (121, 221) dans les au moins deux compartiments de boîtier (100, 200), qui forment l'au moins un premier passage de câble, et **caractérisé en ce que** l'au moins un deuxième câble à fibres optiques (103a -d) est reçu et fixé dans les évidements opposés (122, 222) dans les au moins deux compartiments de boîtier (100, 200), qui forment l'au moins un deuxième passage de câble.

13. Module optique selon la revendication 7 et au moins l'une des revendications 11 - 12, **caractérisé en ce que** les câbles à fibres optiques (102, 103a -d) et les évidements (121, 221, 122, 222) dans les deux compartiments de boîtier (100, 200) sont adaptés l'un à l'autre de telle sorte que lorsque le boîtier est fermé, dans la zone du passage de câble, toute la surface de section transversale de tous les câbles à fibres optiques présents dans un passage de câble est présente à raison de 30 - 70 %, en particulier à raison de 40 - 60 %, spécialement à raison de 45 - 55 %, dans un évidement (121, 122) du premier compartiment de boîtier (100) et est présente à raison de 70 - 30 %, en particulier à raison de 60 - 40 %, spécialement à raison de 55 - 45 %, dans un évidement opposé (221, 222) dans le deuxième compartiment de boîtier (200).

14. Procédé de fabrication d'un module optique selon au moins l'une des revendications 1 - 13, comprenant les étapes suivantes:
a) fournir un boîtier (100, 200) pour le module optique, dans lequel le boîtier comprend au moins un porte-épissure (140), au moins un réservoir de fibres (130) pour recevoir des fibres optiques et au moins un logement (150) pour un splitter optique, et dans lequel le boîtier (100, 200) présente sur un premier côté au moins un premier passage de câble (121, 221), par le biais duquel au moins un premier câble à fibres optiques peut être inséré dans le boîtier (100, 200) et au moins un deuxième passage de câble (122, 222) se trouvant sur un côté de boîtier opposé, par le biais duquel au moins un deuxième câble optique peut être inséré dans le boîtier (100, 200), et dans lequel le réservoir de fibres (130) et l'au moins un logement (150, 250) pour un splitter optique sont disposés les uns derrière les autres dans le boîtier dans une direction allant du premier passage de câble au deuxième passage de câble;
b) fournir un splitter optique (161, 162);
c) introduire un ou plusieurs câbles à fibres optiques (102, 103a -d) dans les passages de câble;
d) relier des fibres optiques exposées d'un câble à fibres optiques (102, 103a -d) par une liaison par épissure avec des fibres de raccordement optiques du splitter optique (161, 162);
e) insérer le splitter optique (161, 162) dans le logement (150, 250) prévu à cet effet ;
f) recevoir des surlongueurs des fibres optiques des câbles à fibres optiques (102, 103a - d) et/ou des fibres de raccordement du splitter optique (161, 162);
g) insérer l'emplacement épissé dans le logement d'épissure (140) ;
h) fermer le boîtier (100, 200).

15. Utilisation d'un module optique selon au moins l'une des revendications 1 - 13 pour la transmission de signaux optiques, en particulier de signaux optiques avec des longueurs d'onde dans la plage de 1260 - 1650 nm.
